# FASCICULE DE BREVET EUROPEEN

(11) **EP 3 870 368 B1**
(45) Date de publication et mention de la délivrance du brevet: **11.01.2023**
(21) Numéro de dépôt: 19813100.5
(22) Date de dépôt: 23.10.2019
(51) Int. Cl.: B01L 3/00, B29C 65/76, B29C 39/00, B81C 99/00, B32B 7/02, B32B 27/38

(54) **PUCE MICROFLUIDIQUE RÉVERSIBLE**
UMKEHRBARER MIKROFLUIDISCHER CHIP
REVERSIBLE MICROFLUIDIC CHIP

(30) Priorité: 26.10.2018 FR 1859900
(43) Date de publication de la demande: 01.09.2021
(73) Titulaire: Institut National des Sciences Appliquées de Toulouse, 31077 Toulouse Cedex 4 (FR); Centre national de la recherche scientifique, 75016 Paris (FR)
(72) Inventeur: RAFFY, Simon, 31400 TOULOUSE (FR); RESSIER, Laurence, 31320 AUZEVILLE TOLOSANE (FR); PALLEAU, Etienne, 31750 ESCALQUENS (FR)
(74) Mandataire: Ipsilon
(86) Numéro de dépôt international: PCT/FR2019/052530
(87) Numéro de publication internationale: WO 2020/084255

(56) Documents cités:
- US-A1- 2017 156 623
- ZHEN CHENG ET AL: "Enclosed casting of epoxy resin for rapid fabrication of rigid microfluidic chips", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, vol. 252, 9 juin 2017 (2017-06-09), pages 785-793, XP055593485, NL ISSN: 0925-4005, DOI: 10.1016/j.snb.2017.06.053
- REBECCA J JACKMAN ET AL: "Microfluidic systems with on-line UV detection fabricated in photodefinable epoxy; Microfluidic systems with on-line UV detection", JOURNAL OF MICROMECHANICS & MICROENGINEERING, INSTITUTE OF PHYSICS PUBLISHING, BRISTOL, GB, vol. 11, no. 3, 28 mars 2001 (2001-03-28), pages 263-269, XP020068645, ISSN: 0960-1317, DOI: 10.1088/0960-1317/11/3/316
- SETHU P ET AL: "Cast epoxy-based microfluidic systems and their application in biotechnology", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 98, no. 2-3, 15 mars 2004 (2004-03-15), pages 337-346, XP004493696, ISSN: 0925-4005, DOI: 10.1016/J.SNB.2003.09.036
- Esprit Composite: "Résine Époxy EC251", , 22 octobre 2007 (2007-10-22), XP055593396, 22 Rue Gassendi, 75014 Paris, France Extrait de l'Internet: URL:https://espritcomposite.com/img/cms/pd f/resine_epoxy_ec251_ft.pdf [extrait le 2019-06-03]

## Description

L'invention concerne une puce microfluidique réversible comprenant au moins une partie inférieure et au moins une partie supérieure configurée pour venir en contact de ladite partie inférieure et fermer ladite puce, ladite partie inférieure et/ou ladite partie supérieure comprenant une structure microfluidique, et ladite partie supérieure comprenant au moins une couche d'un matériau polymère époxyde souple et au moins une couche d'un matériau polymère époxyde rigide, au moins une partie de la couche souple étant directement en contact physique avec la partie inférieure de la puce lorsque celle-ci est en configuration fermée, son procédé de fabrication, l'utilisation de ladite partie supérieure dans une puce microfluidique réversible, et les utilisations de ladite puce dans diverses applications.

Une puce microfluidique ouvrable et refermable de manière réversible est connue notamment du document US 2017/156623 A1.

L'invention s'applique plus particulièrement, mais non exclusivement, au domaine des puces microfluidiques utilisables pour suivre des réactions et/ou interactions, tout en garantissant une ouverture et une fermeture rapide lors de la mise en place d'un échantillon dont on veut suivre les réactions en temps réel.

Ces dernières années, les puces microfluidiques ont peu à peu remplacé les systèmes conventionnels de réalisation de protocoles biologiques (plaquettes à puits, tubes, Eppendorf, pipettes...). Les puces microfluidiques permettent notamment de manipuler des fluides (échantillons biologiques, réactifs, solvants) en très petit volume (e.g. du microlitre au picolitre), ce qui est particulièrement avantageux lorsque les échantillons sont rares et les réactifs coûteux, et/ou lorsque l'on souhaite manipuler des objets dont la taille est de l'ordre de grandeur de la cellule (e.g. manipulation de brins d'ADN). Une puce microfluidique comprend généralement une structure microfluidique contenant un ou des canaux microfluidiques ou micro-canaux de géométries variées (formes, dimensionnements, etc...). Les canaux de la puce microfluidique sont connectés entre eux de manière à réaliser une fonction voulue (mélanges, réactions, pompage, tri, contrôle de l'environnement biochimique, etc...). Ce réseau de canaux enfermé dans la puce microfluidique est relié à l'extérieur par des entrées et des sorties percées à travers la puce. Ce sont par ces trous que les liquides (ou les gaz) sont injectés et évacués de la puce microfluidique (à l'aide de tubes, connecteurs, adaptateurs à seringue ou de simples trous dans la puce), avec des systèmes actifs extérieurs (contrôleur de pression, pousse-seringue ou pompes péristaltiques) ou des moyens passifs (e.g. forces capillaires).

Les puces microfluidiques sont fabriquées à partir d'un ou plusieurs matériaux (silicium, verre, matériau polymère) et la géométrie des canaux est obtenue par des moyens directs ou indirects de procédés de type salle blanche : photolithographie et gravure. Le silicium et le verre présentent une forte résistance à la température et aux pressions (500°C pour 300 bars), une bonne résistance chimique, et permettent de moduler facilement les rapports d'aspect de la puce du fait de leur structure rigide (rapport d'aspect allant jusqu'à 2000 pour du verre). Le rapport d'aspect est défini comme le rapport de l'ouverture (largeur) d'un motif ou d'un canal sur sa profondeur (hauteur). Un rapport d'aspect élevé peut permettre de modifier les profils d'écoulement, d'élargir la fenêtre d'observation, et/ou de faire de l'approximation 2D expérimentale. Cependant, de tels matériaux sont difficiles à sceller, il existe peu de méthodes disponibles (fonctionnalisation chimique, fusion locale, utilisation d'adhésifs), et elles ne sont pas réversibles ou ne peuvent pas être utilisées un grand nombre de fois. Par conséquent, lorsque la puce a été fermée hermétiquement et utilisée, elle ne peut plus servir une nouvelle fois sans être endommagée. Par ailleurs, elle ne peut pas être ouverte et refermée rapidement, notamment pour introduire un échantillon. Ceci représente un inconvénient si l'on souhaite contrôler la mise en contact et la circulation de fluides sur cet échantillon. De plus, les méthodes disponibles pour réaliser les micro-canaux de ces puces sont issues des techniques de la microélectronique et requièrent pour certaines des équipements lourds et coûteux. Enfin, les puces en verre sont fragiles, et peu adaptées à du prototypage faible coût.

Des matériaux polymères ont également été proposés, tels que des matériaux polymérisés par ajout d'un amorceur ou d'un agent de réticulation (résine époxyde commercialisée sous la référence SU-8, PDMS), ou des matériaux polymères thermoplastiques (polytétrafluoroéthylène, polycarbonate, polystyrène). Ces matériaux présentent des propriétés physico-chimiques variables. À la différence du silicium et du verre, les matériaux polymères permettent un scellage de la puce plus simple et versatile. Plusieurs méthodes sont utilisées telles que le scellage magnétique, le scellage mécanique (utilisation de pinces ou de vis), pneumatique (aspiration d'air ou mise sous vide), l'utilisation d'adhésifs, la fonctionnalisation chimique, etc...Toutefois, la plupart de ces méthodes ne résistent pas à des pressions élevées, induisant une pression d'usage limitée (i.e. inférieures à quelques bars), ou peuvent générer des défauts d'étanchéité.

Les puces microfluidiques les plus couramment utilisées comprennent une partie inférieure ou substrat ayant une surface plane (e.g. substrat de verre), et une partie supérieure en un matériau polymère contenant une structure microfluidique (les micro-canaux moulés dans la partie supérieure), la partie supérieure étant capable de venir en contact de ladite partie inférieure et fermer ladite puce. Le matériau polymère le plus fréquemment employé est le PDMS, car il permet un prototypage rapide, et l'obtention de nombreuses géométries ; et il offre une bonne compatibilité avec les systèmes biologiques vivants. La fabrication d'une puce microfluidique commence par le dessin des canaux sur un logiciel dédié (AUTOCAD, LEDIT, Illustrator ...). Une fois ce dessin effectué, il est transféré sur un masque optique tel qu'une plaque de verre recouverte de chrome ou un film polymère. Les micro-canaux sont imprimés avec une encre opaque aux UV (si le support est un film polymère) ou gravés dans le chrome (si le support est une plaque de verre). Puis, un moule microfluidique est fabriqué par photolithographie. Au cours de cette étape, les dessins représentant les micro-canaux sur le masque sont transformés en véritables micro-canaux sur un moule. Par exemple, une résine époxyde (e.g. résine photosensible négative de type époxyde vendue sous la dénomination commerciale SU-8) est déposée sur un support plat (e.g. plaque de silicium) avec l'épaisseur voulue (qui déterminera la hauteur des micro-canaux). La résine époxyde protégée par le masque sur lesquels les canaux sont dessinés, est ensuite partiellement exposée aux UV. Seules les parties représentant les canaux sont exposées aux UV et polymérisées, les autres parties du moule étant protégées par les zones opaques du masque. Le moule est développé dans un solvant qui dissout toutes les zones de résine qui n'ont pas été exposées aux UV. Dans le cas d'une résine positive, ce sont les zones insolées par UV qui sont dissoutes. Un moule microfluidique avec une réplique en résine des motifs qui étaient présents sur le photomasque (les futurs micro-canaux sont des "reliefs" sur le moule) est ainsi obtenu. Les micro-canaux fabriqués en relief sur le moule permettent par la suite d'obtenir des répliques creusées dans le futur matériau de la puce microfluidique. Par exemple, lorsque le futur matériau de la puce est du PDMS, un mélange de PDMS sous forme liquide et d'agent réticulant est versé sur le moule microfluidique tel que préparé précédemment, et l'ensemble peut éventuellement être placé dans un four pour accélérer la polymérisation. Une fois le PDMS solidifié, il peut être décollé du moule. Une réplique des micro-canaux en PDMS est alors obtenue. Pour permettre l'injection des fluides, les entrées et sorties de la puce microfluidique sont percées dans le PDMS à l'aide d'une aiguille ou d'un emporte-pièce de la taille des futurs tubes ou connectiques extérieurs. Enfin, la face du bloc de PDMS avec les micro-canaux et le substrat de verre sont traitées au plasma, de façon à permettre ensuite de coller le PDMS et le substrat de verre pour fermer irréversiblement la puce microfluidique. Toutefois, le PDMS ne résiste pas aux solvants organiques (e.g. solvants hydrocarbonés tels que l'hexane), il peut absorber des petites molécules, limitant les réactions testées, il se déforme sous une pression ou un débit élevé(e), il ne permet pas la formation de puces microfluidiques à rapports d'aspect élevés (e.g. supérieurs à 20).

Une puce microfluidique comprenant une partie inférieure en PMMA, et une partie supérieure en résine époxyde contenant une structure microfluidique, ladite partie supérieure étant capable de venir en contact de ladite partie inférieure et fermer ladite puce, a été proposée dans la demande internationale WO2011/072713 A1. Toutefois, la puce n'est pas réversible, et ne permet pas de suivre une réaction et/ou d'introduire un échantillon dont on veut suivre les évolutions. Par ailleurs, le rapport d'aspect d'une telle puce reste faible.

Le but de la présente invention est donc de pallier les inconvénients précités, et de fournir une puce microfluidique réversible ; pouvant s'ouvrir et se fermer rapidement et facilement, notamment afin de pouvoir introduire des échantillons de toute nature (e.g. réactifs sensibles, réactifs dilués dans des solvants organiques) ; permettant de visualiser cet échantillon en temps réel, et/ou de contrôler la mise en contact et la circulation de fluides sur cet échantillon, notamment pour mesurer des cinétiques de réactions et/ou interactions de façon fiable ; permettant de travailler à des pressions acceptables ; atteignant des rapports d'aspect élevés, notamment pour obtenir des performances d'analyse améliorées ; et conservant les principaux avantages des puces microfluidiques en polymère, c'est-à-dire la modularité et la microfabrication relativement simple.

L'invention a pour premier objet une puce microfluidique réversible comprenant au moins une partie inférieure et au moins une partie supérieure configurée pour venir en contact de ladite partie inférieure et fermer ladite puce, caractérisée en ce que :
^{∗} ladite partie inférieure et/ou ladite partie supérieure comprend une structure microfluidique,
^{∗} ladite partie supérieure comprend au moins une première couche d'un matériau polymère époxyde ayant un module de Young Y₁, et au moins une deuxième couche d'un matériau polymère époxyde ayant un module de Young Y₂, lesdites première et deuxième couches étant telles que :
   - le rapport Y₁/Y₂ est supérieur ou égal à 50,
   - Y₂ est inférieur ou égal à 50 MPa, et
^{∗} au moins une partie de ladite deuxième couche est directement en contact physique avec la partie inférieure de ladite puce lorsque la puce est en configuration fermée.

Ainsi, grâce aux première et deuxième couches de modules de Young respectifs Y₁ et Y₂ dans la partie supérieure de la puce microfluidique, avec au moins une partie de ladite deuxième couche étant directement en contact physique avec la partie inférieure de ladite puce lorsque la puce est en configuration fermée, on obtient une puce microfluidique réversible, pouvant s'ouvrir et se fermer rapidement et facilement, ayant des rapports d'aspect élevés, permettant de travailler à des pressions acceptables (de l'ordre du bar), ayant une bonne résistance chimique, en particulier vis-à-vis de solvants organiques généralement exclus de par leur capacité à déformer ou détériorer les puces conventionnelles en PDMS (solvants hydrocarbonés tels que l'hexane), et ayant la capacité de s'auto-réparer. En particulier, la réversibilité de la puce de l'invention et sa capacité d'autoréparation de la zone d'adhésion de la partie supérieure avec la partie inférieure permettent de limiter les coûts et temps associés à la conception de puces classiques.

Au sens de l'invention, l'expression « réversible » signifie que la puce peut s'ouvrir et se fermer plusieurs fois. La puce est par conséquent à scellage (et ouverture) réversible. En d'autres termes, la liaison entre les parties inférieure et supérieure est réversible. *A contrario,* les puces de l'art antérieur sont irréversibles, i.e. que la liaison entre les parties inférieure et supérieure est permanente. Une fois scellées, elles ne peuvent plus s'ouvrir sans être endommagées.

### La partie supérieure

### La première couche

La première couche de matériau polymère époxyde de la partie supérieure a un module de Young Y₁. Cette première couche représente une couche rigide, par comparaison avec la deuxième couche de la partie supérieure. Cette première couche permet notamment d'ouvrir et de fermer la puce de façon simple, rapide, et réversible. En particulier, la puce microfluidique de l'invention peut être ouverte et fermée plusieurs fois, et ainsi réutilisée au moins une vingtaine de fois, et de préférence au moins une quarantaine de fois. Par ailleurs, la première couche de la partie supérieure atténue la déformation des canaux et limite ainsi l'arrachement lors des écoulements sous pression. Enfin, grâce à la première couche, il est possible de produire des motifs ou canaux de rapports d'aspect élevés (e.g. supérieur à 1000), et également de former une cavité dans la partie supérieure, notamment permettant de visualiser et suivre l'évolution d'un échantillon pouvant atteindre l'échelle centimétrique.

La première couche est telle que le rapport Y₁/Y₂ est supérieur ou égal à 50 environ, de préférence supérieur ou égal à 100 environ, de façon particulièrement préférée supérieur ou égal à 150 environ, et de façon plus particulièrement préférée supérieur ou égal à 200 environ.

La première couche peut être telle que le rapport Y₁/Y₂ est inférieur ou égal à 2000 environ, de préférence inférieur ou égal à 1500 environ, et de façon particulièrement préférée inférieur ou égal à 1250 environ.

Le module de Young Y₁ de la première couche est d'au moins 0,1 GPa environ, de préférence d'au moins 0,5 GPa, de façon particulièrement préférée d'au moins 1 GPa, et de façon plus particulièrement préférée d'au moins 1,5 GPa environ.

Dans la présente invention, le module de Young est déterminé à température ambiante (i.e. 20-25°C), de préférence à l'aide d'un appareil vendu sous la dénomination commerciale Krautkramer USM 35X, par la société GE Inspection Technologies, ledit appareil comprenant des transducteurs Krautkramer G5KB et K4KY de la société GE Inspection Technologies.

La première couche est de préférence une couche transparente.

Au sens de l'invention, un élément transparent ou couche transparente peut transmettre au moins une partie de la lumière incidente (ou rayon lumineux incident) avec très peu voire sans dispersion. De préférence, la transmission lumineuse, notamment la transmission de la lumière visible, à travers l'élément transparent ou la couche transparente est d'au moins 60% environ (pour 1cm d'échantillon traversé). La transmission lumineuse est la quantité de lumière que laisse passer l'élément transparent ou couche transparente à partir d'un rayon lumineux incident. La transmission lumineuse visible est la quantité de lumière visible, correspondant aux ondes électromagnétiques dont la longueur d'onde correspond au spectre visible, soit entre les longueurs d'onde 380 et 780 nm environ, que laisse passer l'élément transparent ou la couche transparente à partir d'un rayon lumineux incident. Dans la présente invention, la transparence optique est déterminée à l'aide d'un appareil vendu sous la dénomination commerciale Cary 5000 UV-Vis-NIR par la société Agilent. Les mesures ont été effectuées de 175 à 800 nm.

Le matériau polymère époxyde de la première couche peut comprendre au moins 70% en masse environ de polymère(s) époxyde(s), de préférence au moins 80% en masse environ de polymère(s) époxyde(s), de façon particulièrement préférée au moins 90% en masse environ de polymère(s) époxyde(s), et de façon plus particulièrement préférée au moins 95% en masse environ de polymère(s) époxyde(s).

Le matériau polymère époxyde de la première couche peut être obtenu à partir d'une composition réticulable A comprenant un ou plusieurs précurseurs époxydes.

Au sens de l'invention, un précurseur époxyde comprend un ou plusieurs groupes époxydes (ou cycles oxyranes).

La composition réticulable A de l'invention peut être sous la forme d'un mélange de monomères et/ou d'oligomères et/ou de polymères.

La polymérisation de la composition réticulable A permet d'obtenir le matériau polymère époxyde de la première couche, et ainsi de former la première couche de la partie supérieure de la puce.

Le précurseur époxyde de la composition réticulable A peut être choisi parmi les résines époxydes cycloaliphatiques, les résines époxydes d'éthers polyglycidyliques, les résines époxydes d'esters polyglycidyliques, les résines composites époxydes obtenues par copolymérisation avec du méthacrylate de glycidyl, et les résines époxydes obtenues à partir de glycérides d'acides gras insaturés.

Les résines époxydes d'éthers polyglycidyliques sont particulièrement préférées.

À titre d'exemples préférés de résines époxydes d'éthers polyglycidyliques, on peut citer les produits de réaction de condensation de l'épichlorhydrine avec des polyphénols tels que le bisphénol A ou le bisphénol F, les résines époxydes aliphatiques d'éthers polyglycidyliques, les résines époxydes aromatiques d'éthers polyglycidyliques, ou un de leurs mélanges.

Les résines époxydes d'éthers polyglycidyliques sont de préférence des époxydes d'éthers diglycidyliques.

Selon une forme de réalisation préférée, la composition réticulable A comprend au moins un premier précurseur époxyde choisi parmi les produits de réaction de condensation de l'épichlorhydrine avec un polyphénol, de préférence les produits de réaction de condensation de l'épichlorhydrine avec un polyphénol A ou un polyphénol F, et de façon particulièrement préférée les produits de réaction de condensation de l'épichlorhydrine avec un polyphénol A.

Le premier précurseur peut représenter au moins 20% en poids, de préférence au moins 25% en poids, et de façon particulièrement préférée au moins 30% en poids, par rapport au poids total de la composition réticulable A.

Le premier précurseur peut représenter au plus 90% en poids, et de préférence au plus 80% en poids, par rapport au poids total de la composition réticulable A.

Le premier précurseur peut être le seul précurseur époxyde de la composition réticulable A ou être associé à d'autres précurseurs époxydes.

La composition réticulable A peut comprendre en outre au moins un deuxième précurseur époxyde choisi parmi les résines époxydes aliphatiques d'éthers diglycidyliques, les résines époxydes aromatiques d'éthers diglycidyliques, et les produits de réaction de condensation de l'épichlorhydrine avec un polyphénol, et de préférence choisi parmi les résines époxydes aliphatiques d'éthers diglycidyliques, et les produits de réaction de condensation de l'épichlorhydrine avec un polyphénol.

Le deuxième précurseur peut représenter au moins 2% en poids, et de préférence au moins 4% en poids, par rapport au poids total de la composition réticulable A.

Le deuxième précurseur peut représenter au plus 50% en poids, et de préférence au plus 45% en poids, par rapport au poids total de la composition réticulable A.

Lorsque la composition réticulable A comprend un premier et un deuxième précurseurs choisis parmi les produits de réaction de condensation de l'épichlorhydrine avec un polyphénol, lesdits premier et deuxième précurseurs époxydes sont différents. Par exemple, la composition réticulable A peut comprendre un produit de réaction de condensation de l'épichlorhydrine avec le bisphénol A, et un produit de réaction de condensation de l'épichlorhydrine avec le bisphénol F.

La composition réticulable A peut comprendre en outre au moins un troisième précurseur époxyde choisi parmi les résines époxydes aliphatiques d'éthers monoglycidyliques, et les résines époxydes aromatiques d'éthers monoglycidyliques.

Le troisième précurseur peut représenter au moins 2% en poids, et de préférence au moins 4% en poids, par rapport au poids total de la composition réticulable A.

Le troisième précurseur peut représenter au plus 80% en poids, et de préférence au moins 70% en poids, par rapport au poids total de la composition réticulable A.

Selon une première forme de réalisation particulièrement préférée de l'invention, la composition réticulable A comprend au moins un produit de réaction de condensation de l'épichlorhydrine avec un polyphénol, au moins une résine époxyde aliphatique d'éther monoglycidylique, et au moins une résine époxyde aliphatique d'éther diglycidylique. À titre d'exemple d'un tel mélange de précurseurs époxydes réticulables, on peut citer le mélange vendu sous la dénomination commerciale EC161 par la société Esprit composite comprenant le produit de réaction du bisphénol A avec l'épichlorhydrine en tant que produit de réaction de condensation de l'épichlorhydrine avec un polyphénol ; les éther glycidyliques d'alkyle en C₁₂-C₁₄ en tant que résines époxydes aliphatiques d'éther monoglycidylique ; et le 1,4-bis(2,3-époxypropoxy)butane en tant que résine époxyde aliphatique d'éther diglycidylique.

Selon une deuxième forme de réalisation particulièrement préférée de l'invention, la composition réticulable A comprend au moins deux produits différents de réaction de condensation de l'épichlorhydrine avec un polyphénol, et au moins une résine époxyde aliphatique d'éther monoglycidylique. À titre d'exemple d'un tel mélange de précurseurs époxydes réticulables, on peut citer le mélange vendu sous la dénomination commerciale WWAS ou WWA par la société Resoltech comprenant le produit de réaction du bisphénol A avec l'épichlorhydrine en tant que premier produit de réaction de condensation de l'épichlorhydrine avec un polyphénol ; le produit de réaction du bisphénol F avec l'épichlorhydrine en tant que deuxième produit de réaction de condensation de l'épichlorhydrine avec un polyphénol, et les éther glycidyliques d'alkyles en C₁₀-C₁₆ en tant que résines époxydes aliphatiques d'éther monoglycidylique.

Dans un mode de réalisation particulier, la composition réticulable A comprend en outre au moins un durcisseur. Ainsi, le matériau polymère époxyde de la première couche peut être obtenu par polymérisation d'une composition réticulable A comprenant au moins un précurseur époxyde tel que défini dans l'invention et au moins un durcisseur, notamment par polycondensation ou par polyaddition, et de préférence par polyaddition.

Le durcisseur (ou agent de réticulation) peut être à base d'au moins un anhydride d'acide, d'au moins une polyamine (e.g. amines (cyclo)aliphatiques, amines aromatiques), d'au moins une polyamide, d'au moins une amidoamine, ou d'un de leurs mélanges.

À titre d'exemples d'anhydrides d'acide, on peut citer le méthyltétrahydrophtalique (MTHPA), l'anhydride méthylnadique (NMA) ou l'anhydride méthylhexahydrophtalique (MHHPA).

À titre d'exemples de polyamines de type amines aliphatiques ou cycloaliphatiques, on peut citer celles comprenant deux amines primaires telles que la diéthylène triamine (DETA), la tétraéthylène tétramine (TETA), les polyétheramines (Jeffamine^{®}), ou l'isophorone diamine (IPDA).

À titre d'exemples de polyamides, on peut citer les produits de la condensation de polyamines avec des dimères acides ou d'acides gras.

À titre d'exemples d'amidoamines, on peut citer les produits de réaction d'acides carboxyliques (dérivés d'acides gras en C₁₆-C₁₉) avec des polyamines aliphatiques (TETA).

À titre d'exemples de polyamines de type amines aromatiques, on peut citer celles comprenant deux amines primaires telles que le 4,4'-diaminodiphénylméthane (DDM), la diaminodiphénylsulfone (DDS), la méthylène-bis(diisopropylaniline) (MPDA) ou la bis(amino-chloro-diéthylphényl)méthane (MCDEA).

À titre d'exemples de polyamines de type amines cycloaliphatiques ou aliphatiques, on peut citer celles comprenant deux ou trois amines primaires telles que la 3-aminomethyl-3,5,5-triméthylcyclohexylamine, la triméthylhexane-1,6-diamine, la polyoxypropylène triamine, ou le poly(propylène glycol)bis(2-aminopropyl éther).

Selon une forme de réalisation préférée, le durcisseur comprend une ou plusieurs polyamines, en particulier une ou plusieurs diamines et/ou triamines, de préférence comprenant des amines primaires.

Le durcisseur peut comprendre en outre au moins un alcool aromatique, tel que l'alcool benzylique.

Selon une forme de réalisation de l'invention, le durcisseur comprend au moins une polyamine aliphatique, de préférence incluant deux ou trois amines primaires ; optionnellement au moins une polyamine cycloaliphatique, de préférence incluant deux ou trois amines primaires ; et optionnellement au moins un phénol.

Selon une forme de réalisation préférée de l'invention, le durcisseur comprend :
- une diamine aliphatique incluant deux amines primaires; un phénol ; et une diamine cycloaliphatique incluant deux amines primaires. À titre d'exemple d'un tel durcisseur, on peut citer un durcisseur vendu sous la dénomination commerciale W242 par la société Esprit composite, ou
- une triamine aliphatique comprenant trois amines primaires. À titre d'exemple d'un tel durcisseur, on peut citer un durcisseur vendu sous la dénomination commerciale WWB4 par la société Resoltech.

Le durcisseur peut comprendre en outre une amine aromatique, notamment afin de réduire la viscosité de la composition réticulable A.

Dans un mode de réalisation, le rapport massique [précurseur(s) époxyde(s)]/durcisseur dans la composition réticulable A varie de 5/6 à 10/3 environ, et de préférence de 1,5 à 2,5 environ.

Dans un autre mode de réalisation, la composition réticulable A comprendre en outre au moins un catalyseur ionique. Ainsi, le matériau polymère époxyde de la première couche peut être obtenu par polymérisation d'au moins un précurseur époxyde tel que défini dans l'invention et d'au moins un catalyseur ionique, notamment par homopolymérisation.

Ledit catalyseur ionique peut être un catalyseur de l'homopolymérisation cationique tel que le bore trifluoré.

La composition réticulable A de l'invention peut en outre comprendre un ou plusieurs additifs, notamment choisis parmi les plastifiants, les pigments et les colorants, les charges, et les retardateurs de flamme. Ces additifs ne doivent toutefois par altérer la transparence de la première couche.

Le matériau polymère époxyde de la première couche peut comprendre en outre au moins un additif choisi parmi des charges inorganiques, les stabilisants, les agents de gélification, et un de leurs mélanges.

L'utilisation de charges inorganiques peut permettre de moduler ses propriétés mécaniques et/ou thermiques et/ou optiques.

Dans ce mode de réalisation, la composition réticulable A peut comprendre de tels additifs.

À titre d'exemple de charges inorganiques, on peut citer des (nano)particules de silice ou des (nano)particules de fer.

À titre d'exemple de stabilisants, on peut citer le sébacate de bis(1,2,2,6,6-pentaméthyl-4-pipéridyle).

À titre d'exemple d'agents de gélification, on peut citer le p-toluènesulfonate de méthyle.

De préférence, la composition réticulable A comprend au plus 10% en poids d'additifs, de façon particulièrement préférée au plus 5% en poids d'additifs, et de façon particulièrement préférée au plus 1% en poids d'additifs, par rapport au poids total de la composition réticulable A.

La première couche peut avoir une épaisseur d'au moins 2 mm.

La première couche de la partie supérieure représente au moins 75% en masse, par rapport à la masse totale de la partie supérieure.

### La deuxième couche

La deuxième couche de matériau polymère époxyde de la partie supérieure a un module de Young Y₂. Cette deuxième couche représente une couche souple, par comparaison avec la première couche de la partie supérieure. Cette deuxième couche présente de bonnes propriétés d'adhésion, et est ainsi capable d'adhérer à la partie inférieure lorsque la puce est en configuration fermée. Par ailleurs, cette deuxième couche est capable de s'auto-régénérer. En d'autres termes, après une première utilisation de la puce, celle-ci peut être ouverte, et de nouveau fermée pour une nouvelle utilisation tout en conservant une bonne adhérence de la deuxième couche à la partie inférieure. En effet, la surface d'adhésion de la partie supérieure qui correspond à ladite au moins une partie de la deuxième couche directement en contact physique avec la partie inférieure de la puce lorsque la puce est en configuration fermée, peut subir un traitement rapide après l'ouverture de la puce, pour pouvoir être réutilisée plusieurs fois.

La deuxième couche est telle que Y₂ est inférieur ou égal à 50 MPa environ, de préférence Y₂ est inférieur ou égal à 25 MPa environ, de façon particulièrement préférée Y₂ est inférieur ou égal à 15 MPa environ, et de façon plus particulièrement préférée Y₂ est inférieur ou égal à 10 MPa environ.

Selon un mode de réalisation de l'invention, la deuxième couche présente un module de Young Y₂ d'au moins 100 kPa environ, de préférence d'au moins 500 kPa environ, et de façon particulièrement préférée d'au moins 1 MPa environ.

La deuxième couche est de préférence une couche transparente.

Le matériau polymère époxyde de la deuxième couche peut comprendre au moins 70% en masse environ de polymère(s) époxyde(s), de préférence au moins 80% en masse environ de polymère(s) époxyde(s), de façon particulièrement préférée au moins 90% en masse environ de polymère(s) époxyde(s), et de façon plus particulièrement préférée au moins 95% en masse environ de polymère(s) époxyde(s).

Le matériau polymère époxyde de la deuxième couche peut être obtenu à partir d'une composition réticulable B comprenant un ou plusieurs précurseurs époxydes.

La composition réticulable B de l'invention peut être sous la forme d'un mélange de monomères et/ou d'oligomères et/ou de polymères.

La polymérisation de la composition réticulable B permet d'obtenir le matériau polymère époxyde de la deuxième couche, et ainsi de former la deuxième couche de la partie supérieure de la puce.

Le précurseur époxyde peut être choisi parmi les résines époxydes cycloaliphatiques, les résines époxydes d'éthers polyglycidyliques, les résines époxydes d'esters polyglycidyliques, les résines composites époxydes obtenues par copolymérisation avec du méthacrylate de glycidyl, et les résines époxydes obtenues à partir de glycérides d'acides gras insaturés.

Les résines époxydes d'éthers polyglycidyliques sont particulièrement préférées.

À titre d'exemples préférés de résines époxydes d'éthers polyglycidyliques, on peut citer les produits de réaction de condensation de l'épichlorhydrine avec des polyphénols tels que le bisphénol A ou le bisphénol F, les résines époxydes aliphatiques d'éthers polyglycidyliques, les résines époxydes aromatiques d'éthers polyglycidyliques, ou un de leurs mélanges.

Les résines époxydes d'éthers polyglycidyliques sont de préférence des époxydes d'éthers diglycidyliques.

Selon une forme de réalisation préférée, la composition réticulable B comprend au moins un premier précurseur époxyde choisi parmi les produits de réaction de condensation de l'épichlorhydrine avec un polyphénol, de préférence les produits de réaction de condensation de l'épichlorhydrine avec un polyphénol A ou un polyphénol F, et de façon particulièrement préférée les produits de réaction de condensation de l'épichlorhydrine avec un polyphénol A.

Le premier précurseur peut représenter au moins 20% en poids, de préférence au moins 25% en poids, et de façon particulièrement préférée au moins 30% en poids, par rapport au poids total de la composition réticulable B.

Le premier précurseur peut représenter au plus 90% en poids, et de préférence au plus 80% en poids, par rapport au poids total de la composition réticulable B.

Le premier précurseur peut être le seul précurseur époxyde de la composition réticulable B ou être associé à d'autres précurseurs époxydes.

La composition réticulable B peut comprendre en outre au moins un deuxième précurseur époxyde choisi parmi les résines époxydes aliphatiques d'éthers diglycidyliques, les résines époxydes aromatiques d'éthers diglycidyliques, et les produits de réaction de condensation de l'épichlorhydrine avec un polyphénol, et de préférence choisi parmi les résines époxydes aliphatiques d'éthers diglycidyliques, et les produits de réaction de condensation de l'épichlorhydrine avec un polyphénol.

Le deuxième précurseur peut représenter au moins 2% en poids, et de préférence au moins 4% en poids, par rapport au poids total de la composition réticulable B.

Le deuxième précurseur peut représenter au plus 50% en poids, et de préférence au plus 45% en poids, par rapport au poids total de la composition réticulable B.

Lorsque la composition réticulable B comprend un premier et un deuxième précurseurs choisis parmi les produits de réaction de condensation de l'épichlorhydrine avec un polyphénol, lesdits premier et deuxième précurseurs époxydes sont différents. Par exemple, la composition réticulable A peut comprendre un produit de réaction de condensation de l'épichlorhydrine avec le bisphénol A, et un produit de réaction de condensation de l'épichlorhydrine avec le bisphénol F.

La composition réticulable B peut comprendre en outre au moins un troisième précurseur époxyde choisi parmi les résines époxydes aliphatiques d'éthers monoglycidyliques, les résines époxydes aromatiques d'éthers monoglycidyliques.

Le troisième précurseur peut représenter au moins 2% en poids, et de préférence au moins 4% en poids, par rapport au poids total de la composition réticulable B.

Le troisième précurseur peut représenter au plus 80% en poids, et de préférence au moins 70% en poids, par rapport au poids total de la composition réticulable B.

Les résines époxydes aliphatiques d'éthers polyglycidyliques peuvent être substituées par au moins un groupe silane, tel qu'un groupe triméthoxysilane ou triéthoxysilane. Le groupe silane a pour fonction d'assouplir la deuxième couche, et joue le rôle de plastifiant et/ou flexibilisant.

La composition réticulable B peut comprendre en outre au moins un composé comprenant un ou plusieurs fonctions réactives, telles que des fonctions acrylates.

Selon une première forme de réalisation particulièrement préférée de l'invention, la composition réticulable B comprend au moins un produit de réaction de condensation de l'épichlorhydrine avec un polyphénol, au moins une résine époxyde aliphatique d'éther monoglycidylique, au moins une résine époxyde aliphatique d'éther monoglycidylique substituée par un groupe triméthoxysilane, et au moins une résine époxyde aliphatique d'éther diglycidylique. À titre d'exemple d'un tel mélange de précurseurs époxydes réticulables, on peut citer le mélange vendu sous la dénomination commerciale EC251 par la société Esprit composite comprenant le produit de réaction du bisphénol A avec l'épichlorhydrine en tant que produit de réaction de condensation de l'épichlorhydrine avec un polyphénol ; les éther glycidyliques d'alkyles en C₁₀-C₁₆ en tant que résines époxydes aliphatiques d'éther monoglycidylique ; le [3-(2,3-époxypropoxy)propyl]triméthoxysilane en tant que résine époxyde aliphatique d'éther monoglycidylique substituée par un groupe triméthoxysilane ; et le 1,6-bis(2,3-époxypropoxy)hexane en tant que résine époxyde aliphatique d'éther diglycidylique.

Selon une deuxième forme de réalisation particulièrement préférée de l'invention, la composition réticulable B comprend au moins deux produits différents de réaction de condensation de l'épichlorhydrine avec un polyphénol, et au moins une résine époxyde aliphatique d'éther monoglycidylique. À titre d'exemple d'un tel mélange de précurseurs époxydes réticulables, on peut citer le mélange vendu sous la dénomination commerciale WWAS ou WWA par la société Resoltech comprenant le produit de réaction du bisphénol A avec l'épichlorhydrine en tant que premier produit de réaction de condensation de l'épichlorhydrine avec un polyphénol ; le produit de réaction du bisphénol F avec l'épichlorhydrine en tant que deuxième produit de réaction de condensation de l'épichlorhydrine avec un polyphénol, et les éther glycidyliques d'alkyles en C₁₀-C₁₆ en tant que résines époxydes aliphatiques d'éther monoglycidylique.

Dans un mode de réalisation particulier, la composition réticulable B comprend en outre au moins un durcisseur. Ainsi, le matériau polymère époxyde de la deuxième couche peut être obtenu par polymérisation d'une composition réticulable B comprenant au moins un précurseur époxyde tel que défini dans l'invention et au moins un durcisseur, notamment par polycondensation ou par polyaddition, et de préférence par polyaddition.

Le durcisseur (ou agent de réticulation) peut être à base d'au moins un anhydride d'acide, d'au moins une polyamine (e.g. amines (cyclo)aliphatiques, amines aromatiques), d'au moins une polyamide, d'au moins une amidoamine, ou d'un de leurs mélanges.

À titre d'exemples d'anhydrides d'acide, on peut citer le méthyltétrahydrophtalique (MTHPA), l'anhydride méthylnadique (NMA) ou l'anhydride méthylhexahydrophtalique (MHHPA).

À titre d'exemples de polyamines de type amines aliphatiques ou cycloaliphatiques, on peut citer celles comprenant deux amines primaires telles que la diéthylène triamine (DETA), la tétraéthylène tétramine (TETA), les polyétheramines (Jeffamine^{®}), ou l'isophorone diamine (IPDA).

À titre d'exemples de polyamides, on peut citer les produits de la condensation de polyamines avec des dimères acides ou d'acides gras.

À titre d'exemples d'amidoamines, on peut citer les produits de réaction d'acides carboxyliques (dérivés d'acides gras en C₁₆-C₁₉) avec des polyamines aliphatiques (TETA).

À titre d'exemples de polyamines de type amines aromatiques, on peut citer celles comprenant deux amines primaires telles que le 4,4'-diaminodiphénylméthane (DDM), la diaminodiphénylsulfone (DDS), la méthylène-bis(diisopropylaniline) (MPDA) ou la bis(amino-chlorodiéthylphényl)méthane (MCDEA).

À titre d'exemples de polyamines de type amines cycloaliphatiques ou aliphatiques, on peut citer celles comprenant deux ou trois amines primaires telles que la 3-aminomethyl-3,5,5-triméthylcyclohexylamine, la triméthylhexane-1,6-diamine, la polyoxypropylène triamine, ou le poly(propylène glycol)bis(2-aminopropyl éther).

Selon une forme de réalisation préférée, le durcisseur comprend une ou plusieurs polyamines, en particulier une ou plusieurs diamines et/ou triamines, de préférence comprenant des amines primaires.

Le durcisseur peut comprendre en outre au moins un alcool aromatique, tel que l'alcool benzylique.

Selon une forme de réalisation de l'invention, le durcisseur comprend au moins une polyamine aliphatique, de préférence incluant deux ou trois amines primaires ; optionnellement au moins une polyamine cycloaliphatique, de préférence incluant deux ou trois amines primaires ; et optionnellement au moins un phénol.

Selon une forme de réalisation préférée de l'invention, le durcisseur comprend :
- une diamine aliphatique incluant deux amines primaires ; un phénol ; et une diamine cycloaliphatique incluant deux amines primaires. À titre d'exemple d'un tel durcisseur, on peut citer un durcisseur vendu sous la dénomination commerciale W242 par la société Esprit composite, ou
- une triamine aliphatique comprenant trois amines primaires. À titre d'exemple d'un tel durcisseur, on peut citer un durcisseur vendu sous la dénomination commerciale WWB4 par la société Resoltech.

Le durcisseur peut comprendre en outre une amine aromatique, notamment afin de réduire la viscosité de la composition réticulable B.

Dans un mode de réalisation, le rapport massique [précurseur(s) époxyde(s)]/durcisseur dans la composition réticulable B varie 5/6 à 6, de préférence de 1 à 10/3 environ, et de faon particulièrement préférée de 1,5 à 2,5 environ.

Dans un autre mode de réalisation particulier, la composition réticulable B comprend en outre au moins un catalyseur ionique. Ainsi, le matériau polymère époxyde de la deuxième couche peut être obtenu par polymérisation d'au moins un précurseur époxyde tel que défini dans l'invention et d'au moins un catalyseur ionique, notamment par homopolymérisation.

Ledit catalyseur ionique peut être un catalyseur de l'homopolymérisation cationique tel que le bore trifluoré.

La composition réticulable B de l'invention peut en outre comprendre un ou plusieurs additifs, notamment choisis parmi les plastifiants, les stabilisants, les agents de gélification, les pigments et les colorants, les charges, les retardateurs de flamme, et un de leurs mélanges.

Le matériau polymère époxyde de la deuxième couche peut comprendre en outre au moins un additif choisi parmi les plastifiants, les silanes, les tensioactifs, et un de leurs mélanges. Cela peut permettre de moduler ses propriétés mécaniques et sa tension superficielle. Dans ce mode de réalisation, la composition réticulable B peut comprendre au moins un tel additif.

À titre d'exemple de stabilisants, on peut citer le sébacate de bis(1,2,2,6,6-pentaméthyl-4-pipéridyle).

À titre d'exemple d'agents de gélification, on peut citer le p-toluènesulfonate de méthyle.

À titre de plastifiants, on peut citer les composés acrylate, les produits de réaction de dérivés de polyglycols, ou les carbonates de propylène, d'éthylène, de vinylène ou de fluoroéthylène.

De préférence, la composition réticulable B comprend au plus 10% en poids d'additifs, de façon particulièrement préférée au plus 5% en poids d'additifs, et de façon particulièrement préférée au plus 1% en poids d'additifs, par rapport au poids total de la composition réticulable B.

En particulier, l'absence d'additifs tels que des plastifiants peut permettre d'améliorer la biocompatibilité du matériau polymère époxyde de la deuxième couche.

La deuxième couche a une épaisseur allant de 0,2 mm à 2 mm environ.

Selon une forme de réalisation de l'invention, la partie supérieure comprend uniquement la première et la deuxième couches telles que définies dans l'invention.

Selon une autre forme de réalisation, la partie supérieure peut comprendre n couches supplémentaires d'un matériau polymère époxyde interposées entre les première et deuxième couches telles que définies dans l'invention, avec n ≥ 1, chacune des n couches ayant un module de Young Yᵢ, avec 3 ≤ i ≤ n ; lesdites n couches étant telles que Y₁ > Y₃, Yᵢ > Yᵢ₊₁, et Yₙ > Y₂. Ainsi, on obtient une partie supérieure de puce microfluidique à gradient de module de Young.

La deuxième couche représente au plus 25% en masse, par rapport à la masse totale de la partie supérieure.

Selon une forme de réalisation particulièrement préférée de l'invention :
^{∗} le matériau polymère époxyde de la première couche est obtenu par polyaddition d'une composition réticulable A comprenant au moins un premier précurseur époxyde choisi parmi les produits de réaction de condensation de l'épichlorhydrine avec un polyphénol, au moins un deuxième précurseur époxyde choisi parmi les résines époxydes aliphatiques d'éthers diglycidyliques et les produits de réaction de condensation de l'épichlorhydrine avec un polyphénol, et au moins un durcisseur,
^{∗} le matériau polymère époxyde de la deuxième couche est obtenu par polyaddition d'une composition réticulable B comprenant au moins un premier précurseur époxyde choisi parmi les produits de réaction de condensation de l'épichlorhydrine avec un polyphénol, au moins un deuxième précurseur époxyde choisi parmi les résines époxydes aliphatiques d'éthers diglycidyliques et les produits de réaction de condensation de l'épichlorhydrine avec un polyphénol, et au moins un durcisseur.

L'homme du métier sait comment faire varier les proportions respectives desdits précurseurs époxydes par rapport au durcisseur, ou comment faire varier les proportions respectives de précurseurs époxydes au sein d'une composition réticulable, ou comment faire varier le taux de réticulation desdits précurseurs époxydes, ou comment faire varier la stoechiométrie des groupes fonctionnels au sein des précurseurs époxydes, pour moduler le module d'Young du matériau époxyde obtenu.

A titre d'exemple, le rapport massique [précurseur(s) époxyde(s)]/durcisseur dans la composition réticulable A peut être inférieur ou égal au rapport massique [précurseur(s) époxyde(s)]/durcisseur dans la composition réticulable B, et de préférence strictement inférieur au rapport massique [précurseur(s) époxyde(s)]/durcisseur dans la composition réticulable B.

### La partie supérieure

La partie supérieure est de préférence un élément transparent.

La partie supérieure peut comprendre une face supérieure, qui correspond à la face supérieure de la puce, et une face inférieure, qui correspond à la face qui vient en contact de la partie inférieure de la puce, et ferme ladite puce. En d'autres termes, au moins une partie de la face inférieure de la partie supérieure est directement en contact physique avec la partie inférieure. La face inférieure comprend donc la surface d'adhésion de la partie supérieure à la partie inférieure de la puce. La surface d'adhésion de la partie supérieure est également définie comme ladite au moins une partie de la deuxième couche qui est directement en contact physique avec la partie inférieure de la puce lorsque la puce est en configuration fermée.

La partie supérieure comprend préférentiellement des moyens mécaniques configurés pour ouvrir manuellement la puce microfluidique, de préférence par effet levier.

Selon une forme de réalisation préférée de l'invention, les moyens mécaniques sont des biseaux orientés de façon à ce que la face supérieure de la partie supérieure de la puce soit de plus grande dimension que la face inférieure de ladite partie supérieure.

Dans un mode de réalisation de l'invention, une partie des bords ou tous les bords de la partie supérieure sont taillés obliquement, de sorte que la face supérieure de la partie supérieure soit de plus grande dimension que la face inférieure de la partie supérieure de la puce.

Dans un mode de réalisation particulièrement préféré, la partie supérieure de la puce est sous la forme d'une pyramide tronquée inversée.

L'angle des biseaux, par rapport à la face supérieure de la partie supérieure de la puce, est de préférence supérieur à 90° environ, de façon particulièrement préférée de 100° à 170° environ, et de façon plus particulièrement préférée de 130 à 160° environ.

La largeur D des biseaux est définie comme la distance entre le point pivot P et la résultante (ou projection) du point de pression d'ouverture A de la puce sur la partie inférieure.

La largeur D des biseaux peut aller de 2 mm à 2 cm environ, et de préférence de 5 mm à 1 cm environ.

La largeur d'adhésion Da de la puce est définie comme la distance entre le point pivot P et le début d'un canal microfluidique, le point pivot P étant à la limite de la zone ou surface d'adhésion.

La largeur Da peut aller de 1 mm à 1 cm environ.

L'angle et la largeur des biseaux peuvent être modifiés pour moduler l'adhésion de la partie supérieure de la puce à la partie inférieure de celle-ci, et ainsi la pression maximale d'utilisation de la puce.

Grâce aux biseaux, il est possible d'ouvrir la puce facilement et rapidement (~ 10 secondes) par effet levier en appliquant une pression avec les doigts. Par ailleurs, la puce dispose d'une fermeture rapide (~ 10 secondes) de façon étanche par simple pression des doigts.

Les biseaux permettent de moduler l'adhésion des parties supérieure et inférieure entre elles, et ainsi la pression maximale d'utilisation de la puce.

### La partie inférieure et la puce microfluidique

La partie inférieure peut avoir une forme rectangulaire, notamment de longueur d'au moins 2 cm, et de préférence allant de 2 cm à 20 cm environ, et de largeur d'au moins 2 cm, et de préférence allant de 2 cm à 20 cm environ.

La partie inférieure comprend (ou est constitué) (d')un matériau rigide ayant un module de Young Y'₃ tel que Y'₃ ≥ Y₁, Y₁ étant tel que défini dans l'invention.

Dans un mode de réalisation préféré de l'invention, le module de Young Y'₃ est d'au moins 0,1 GPa environ, de préférence d'au moins 0,5 GPa, de façon particulièrement préférée d'au moins 1 GPa, et de façon plus particulièrement préférée d'au moins 1,5 GPa environ.

Selon un premier mode de réalisation de l'invention, la partie inférieure comprend une structure microfluidique. En d'autres termes, des canaux microfluidiques sont dans la partie inférieure.

Selon ce premier mode de réalisation, la partie inférieure peut comprendre un support sur lequel une structure microfluidique est déposée.

Le support comprend (ou est constitué) de préférence (d')un matériau rigide, par exemple un matériau rigide ayant un module de Young Y'₃ tel que Y'₃ ≥ Y₁, Y₁ et Y'₃ étant tels que définis dans l'invention.

Le support peut par exemple être en un matériau choisi parmi le verre, un polyméthacrylate de méthyle (PMMA), le silicium, un copolymère d'oléfine cyclique (COC), de l'acier poli, ou tout type de matériau rigide ayant un module de Young supérieur ou égal à 100 MPa. Le matériau rigide est notamment adapté pour supporter des étapes de microfabrication.

En d'autres termes, le support ou la partie inférieure n'est de préférence pas en PDMS ou silicone qui est un matériau souple.

La structure microfluidique peut être en matériau polymère, notamment choisi parmi un polyméthacrylate de méthyle (PMMA), un polyéthylène téréphtalate (PET), un polytétrafluoroéthylène (Téflon), un polyimide (krapton), une résine époxyde, et un copolymère d'oléfine cyclique (COC).

À titre d'exemples de tels matériaux polymères, on peut citer la résine époxyde SU-8 commercialisée par MicroChem, les matériaux polymères commercialisés sous les gammes Shipley par MicroChem, sous les gammes AZ par MicroChemicals, ou sous les gammes EF par Engineered Materials Systems, Inc.

Dans une première variante de ce premier mode de réalisation, la face inférieure de la partie supérieure peut avoir une surface plane. Ce premier mode de réalisation - première variante - dit « version plane » permet de faire des études microfluidiques standards (i.e. la mise en oeuvre d'écoulements 2D) de façon plus rapide et plus simple qu'avec les puces en verre conventionnelles ; et de façon aussi simple qu'avec des puces en PDMS conventionnelles mais offrant, grâce aux variations de rapport d'aspect des canaux, une grande modularité sur les profils d'écoulement. La puce réversible obtenue présente en outre une meilleure robustesse.

Dans une deuxième variante de ce premier mode de réalisation, la partie supérieure comprend une cavité ouverte sur la face inférieure. En d'autres termes, la face inférieure de la partie supérieure n'a pas une surface plane. Cette cavité peut notamment être configurée pour introduire un échantillon dont on veut suivre les réactions, et/ou pour contrôler la mise en contact et la circulation de fluides sur un échantillon, et/ou pour observer des phénomènes physico-chimiques ou mesurer des paramètres avec plus de précision. Ce premier mode de réalisation - deuxième variante - dit « version cavité » est particulièrement utile si l'on souhaite suivre ou étudier des mécanismes physico-chimiques, des cinétiques de réaction, et/ou introduire des échantillons, surfaces ou autres objets dans la puce, sur le chemin du ou des fluides.

La cavité peut être de n'importe quelle forme, et plus particulièrement de forme carrée ou rectangulaire.

Généralement, la cavité représente en volume, de 0,1 à 20% environ du volume total de la partie supérieure. Ce volume peut être facilement adapté à l'objet introduit pour assurer la conservation d'un régime d'écoulement laminaire.

Dans le premier mode de réalisation - première et deuxième variantes - les puces disposent d'une importante modularité puisque la partie inférieure comprenant la structure microfluidique est interchangeable.

Par ailleurs, les propriétés mécaniques de la première couche de la partie supérieure permettent d'éviter la déformation mécanique des canaux qui induirait leur affaissement et un arrachement latéral lors des écoulements sous pression ; et par conséquence permettent de créer des canaux avec de forts rapports d'aspect.

Dans le premier mode de réalisation - première et deuxième variantes -, la partie inférieure comprend des motifs de canaux microfluidiques présentant de préférence un rapport d'aspect allant de 1 à 1600, de façon particulièrement préférée allant de 20 à 1600 environ, et de façon plus particulièrement préférée allant de 30 à 1600 environ.

Selon un deuxième mode de réalisation de l'invention, la partie supérieure comprend une structure microfluidique. En d'autres termes, des canaux micro-fluidiques sont dans la partie supérieure (deuxième mode de réalisation - dit « version structure microfluidique »). Dans ce mode de réalisation, la partie inférieure est donc constituée d'un support tel que défini dans l'invention (i.e. sans structure microfluidique).

Grâce aux modules de Young respectifs Y₁ et Y₂ tels que définis dans l'invention des première et deuxième couches de la partie supérieure, des micro-canaux à rapports d'aspect élevés et versatiles peuvent être facilement et rapidement fabriqués dans la partie supérieure de la puce, sans la fragiliser. Ce deuxième mode de réalisation est particulièrement utile pour monter la puce sur une chaine de production pour fonctionnaliser un substrat en défilement. Elle s'accroche et se décroche mécaniquement, et tout type de surface plane peut être utilisée comme partie inférieure puisque les canaux sont dans la partie supérieure.

Dans ce deuxième mode de réalisation, la partie supérieure comprend des motifs de canaux microfluidiques présentant de préférence un rapport d'aspect allant de 1 à 1600, de façon particulièrement préférée allant de 20 à 1600 environ, et de façon plus particulièrement préférée allant de 30 à 1600 environ. Elle peut donc atteindre des rapports d'aspect élevés, uniquement obtenus actuellement avec des matériaux type verre ou éventuellement silicium.

Le rapport d'aspect est défini comme le rapport de la largeur du canal sur sa hauteur.

La puce peut comprendre en outre des orifices d'entrées et sorties de fluides, notamment dans la partie supérieure. Ces entrées et sorties peuvent être connectées à un réseau de distribution des fluides *via* des tuyaux adaptés.

L'épaisseur totale de la puce peut être d'au moins 3 mm environ.

L'épaisseur de la structure microfluidique peut aller de 50 nm à 500 µm environ.

La puce est de préférence un élément transparent.

Selon un troisième mode de réalisation de l'invention, la partie supérieure et la partie inférieure de la puce comprennent une structure microfluidique.

Ce mode de réalisation est particulièrement adapté pour fabriquer des mélangeurs à chevrons en 3D et/ou des générateurs de gouttes en terrasse.

### Procédé de fabrication de la puce microfluidique

L'invention a pour deuxième objet un procédé de fabrication d'une puce microfluidique telle que définie dans le premier objet de l'invention, caractérisé en ce qu'il comprend au moins les étapes suivantes :
i) déposer une composition réticulable B apte à former ledit matériau polymère époxyde ayant un module de Young Y₂, dans un moule polymère approprié de la partie supérieure,
ii) initier la réticulation de la composition réticulable B,
iii) déposer une composition réticulable A apte à former ledit matériau polymère époxyde ayant un module de Young Y₁, sur la composition réticulable B avant la réticulation complète de la composition réticulable B,
iv) laisser réticuler à température ambiante les compositions réticulables A et B pendant un temps suffisant pour former respectivement les première et deuxième couches de la partie supérieure,
v) démouler la partie supérieure de la puce comprenant la première couche et la deuxième couche, et
vi) éventuellement assembler la partie supérieure de la puce avec une partie inférieure, de sorte qu'au moins une partie de ladite deuxième couche soit directement en contact physique avec la partie inférieure de ladite puce.

### Fabrication de la partie supérieure

À l'issue de l'étape i), la surface inférieure du moule est de préférence totalement recouverte par la composition réticulable B.

Selon le type de partie supérieure fabriquée (présence d'une structure microfluidique, d'une cavité ou d'aucun des deux éléments précités), le moule polymère présente une forme adaptée.

Le moule polymère comprend de préférence un polysiloxane, et de préférence encore un polydiméthylsiloxane (PDMS).

Selon une forme de réalisation, le moule polymère comprend au moins une plaque rigide ; et au moins un élément polymère déposé sur ladite plaque rigide, ledit élément polymère ayant une forme adaptée pour servir de moule de la partie supérieure de la puce.

La plaque rigide a de préférence un module de Young supérieur ou égal à 100 MPa environ.

Le matériau de la plaque rigide peut être choisi parmi les polymères, tels que les polyméthacrylates, ou les polyacrylates ; les métaux ; et les céramiques, et de préférence les polymères.

Le polymère de l'élément peut être choisi parmi les polysiloxanes, et de préférence les polydiméthysiloxanes.

L'étape i) est de préférence effectuée à température ambiante (e.g. 18-25°C environ).

La composition réticulable B peut être telle que définie dans le premier objet de l'invention.

L'étape ii) peut durer de 1 seconde à 10 heures, et de préférence de 30 min à 4 heures.

L'étape ii) est de préférence effectuée à température ambiante.

Au cours de l'étape ii), et de l'étape iv), la composition réticulable B réticule et conduit à la formation de la deuxième couche de la partie supérieure de la puce telle que définie dans le premier objet de l'invention.

L'étape iii) est de préférence effectuée à température ambiante (e.g. 18-25°C environ).

À l'issue de l'étape iii), la composition réticulable B qui réticule est de préférence totalement recouverte par la composition réticulable A.

L'étape iii) est effectuée alors que la composition réticulable B n'a pas totalement réticulé ou durci. En d'autres termes, la deuxième couche n'est pas formée quand la composition réticulable A est versée.

L'étape iii) est de préférence effectuée lorsque la composition réticulable B atteint son point de gélification (i.e. lorsqu'elle passe de l'état fluide à l'état solide viscoélastique). En d'autres termes, l'étape iii) est de préférence effectuée lorsque la composition réticulable B ne procure plus de relaxation induite par tension de surface.

La composition réticulable A peut être telle que définie dans le premier objet de l'invention.

L'étape iv) peut durer de 1 seconde à 72 heures, et de préférence de 12 à 48 heures.

Au cours de l'étape iv), les compositions réticulables A et B réticulent et conduisent respectivement à la formation de la première et deuxième couches de la partie supérieure de la puce telle que définie dans le premier objet de l'invention.

Le procédé peut comprendre en outre avant l'étape i), une étape i₀) de préparation de la composition réticulable B.

Le procédé peut comprendre en outre avant l'étape iii), une étape iii₀) de préparation de la composition réticulable A.

Les étapes étape i₀) et iii₀) peuvent être concomitantes.

Le procédé peut comprendre en outre avant l'étape i), une étape a) de fabrication du moule polymère de la partie supérieure.

L'étape a) peut comprendre au moins une sous-étape a₁) de préparation d'un modèle polymère de la partie supérieure, et une sous-étape a₂) de moulage avec ledit modèle polymère.

Selon le modèle polymère souhaité (partie supérieure de la puce avec une surface plane, une structure microfluidique, ou une cavité), la sous-étape a₁) peut comprendre la mise en oeuvre de sous-étape(s) de moulage, photolithographie, usinage, etc... bien connues de l'homme du métier.

Le matériau polymère du modèle peut être choisi parmi les polyacrylates, les polyméthacrylates, les résines époxydes, et tout type de matériau polymère présentant un module de Young supérieur ou égal à 100 MPa environ.

De préférence, les modèles de la partie supérieure « version cavité » et « version structure microfluidique » sont en résine époxyde, et le modèle de la partie supérieure « version plane » est en PMMA.

### Fabrication de la partie inférieure

Lorsque la partie inférieure comprend une structure microfluidique, elle peut être fabriquée par photolithographie. Cette méthode est bien connue de l'homme du métier.

Elle met généralement en oeuvre le laminage ou l'enduction centrifuge (bien connue sous l'anglicisme « *spin coating* ») d'un film de résine photosensible, l'application d'un masque sur la résine photosensible ou d'une autre technique (photolithographie à masquage digital...), l'insolation ciblée de la résine photosensible, et une étape de développement dont les conditions opératoires sont adaptées selon la résine photosensible utilisée (immersion dans un solvant ne solubilisant que la résine insolée ou non insolée, souvent suivie d'un recuit de la résine restante à une température précise). La résine des canaux est alors dissoute.

L'étape vi) d'assemblage peut comprendre le positionnement de la partie supérieure de la puce sur la partie inférieure, et l'application d'une pression homogène sur la partie supérieure de la puce. La composition « bi-couche » de la partie supérieure permet à la fois une fermeture étanche, tout en évitant le gonflement des canaux et leur arrachage.

L'étape vi) peut comprendre en outre, préalablement au positionnement de la partie supérieure de la puce sur la partie inférieure, l'aspersion de la surface d'adhésion de la partie supérieure avec un solvant organique tel que l'acétone ou l'éthanol ; suivi du séchage de ladite surface d'adhésion ; et éventuellement l'introduction d'un échantillon dans la cavité de la partie supérieure si elle existe.

L'aspersion et le séchage sont particulièrement utiles lorsque la puce a déjà été utilisée. Ces étapes permettent d'accroitre la capacité d'adhésion de la surface d'adhésion de la partie supérieure pour que la puce puisse être scellée une nouvelle fois de façon efficace.

L'aspersion et le séchage sont de préférence effectués à température ambiante.

Le séchage peut se faire à l'air comprimé.

La puce microfluidique de l'invention peut être ouverte, notamment par l'application d'une pression localisée au niveau des moyens mécaniques de l'invention, et de préférence au-dessus des biseaux, de la partie supérieure.

La puce microfluidique de l'invention peut être réutilisée grâce à l'aspersion et le séchage de la partie supérieure de la puce. Ces étapes permettent d'accroitre l'adhésion. Une auto régénération se produit sur une échelle de temps allant de 1 à 15 jours et permet de relaxer complètement la surface d'adhésion qui retrouve sa topographie initiale.

Le procédé peut comprendre en outre entre les étapes v) et vi), une étape de perçage de trous au travers de la partie supérieure afin de créer des orifices d'entrées et de sorties de fluides.

### Utilisation de la partie supérieure

L'invention a pour troisième objet l'utilisation d'une partie supérieure comprenant au moins une première couche d'un matériau polymère époxyde ayant un module de Young Y₁, et au moins une deuxième couche d'un matériau polymère époxyde ayant un module de Young Y₂, lesdites première et deuxième couches étant telles que :
- le rapport Y_{1/}Y₂ est supérieur ou égal à 50, et
- Y₂ est inférieur ou égal à 50 MPa,
dans une puce microfluidique réversible.

La puce microfluidique, la partie supérieure, les première et deuxième couches de la partie supérieure, Y₁ et Y₂, peuvent être tels que définis dans le premier objet de l'invention.

En particulier, la partie supérieure telle que définie dans le troisième objet de l'invention peut permettre de réaliser une puce microfluidique conforme au premier objet de l'invention.

Il est également décrit dans la présente demande une partie supérieure pour la réalisation d'une puce microfluidique conforme au premier objet de l'invention, caractérisée en ce qu'elle comprend au moins une première couche d'un matériau polymère époxyde ayant un module de Young Y₁, et au moins une deuxième couche d'un matériau polymère époxyde ayant un module de Young Y₂, lesdites première et deuxième couches étant telles que :
- le rapport Y_{1/}Y₂ est supérieur ou égal à 50, et
- Y₂ est inférieur ou égal à 50 MPa, et
en ce que ladite partie supérieure comprend en outre des moyens mécaniques configurés pour ouvrir manuellement ladite puce microfluidique.

La puce microfluidique, la partie supérieure, les première et deuxième couches de la partie supérieure, Y₁ et Y₂, et les moyens mécaniques peuvent être tels que définis dans le premier objet de l'invention.

### Utilisations

L'invention a pour cinquième objet l'utilisation d'une puce microfluidique telle que définie dans le premier objet de l'invention, dans des applications médicales, biotechnologiques, biologiques, d'analyse, de synthèse chimique, ou de diagnostic clinique.

Plus particulièrement, la puce microfluidique peut être utilisée pour l'automatisation des essais biologiques, de préférence relativement simples, (« immunoassay », chimie du sang, gaz du sang), le séquençage de nouvelle génération (NGS), les tests diagnostic au lit du patient (point-of-care), l'analyse génétique, l'électrophorèse capillaire, l'amplification d'ADN, la biologie cellulaire, la protéomique, le diagnostic, la recherche de médicaments, la synthèse de molécules ou de nanomatériaux, ou les études cinétiques.

La puce de l'invention peut également être utilisé avec toutes les fonctionnalités classiques des puces microfluidiques conventionnelles (écoulement laminaire, mélangeur, générateur de gouttes, etc...), dans l'étude hydrodynamique à bas nombre de Reynolds pour des gammes de rapport d'aspect élevé et versatile, ou dans l'étude d'assemblages 2D de gouttes et bulles et d'écoulement parallèle de plusieurs phases (liquide et/ou gaz).

La puce « version cavité » peut être utilisée pour la visualisation *in situ* de l'interaction de fluides avec un objet, un échantillon, ou une surface extérieure introduite dans la cavité (adsorption, solubilisation, croissance cristalline à partir d'un germe, culture cellulaire, organ-on-chip, réaction chimique en milieu discontinu, etc...). Plus particulièrement, elle peut être utilisée pour les études cinétiques de l'assemblage par nanoxérographie de nanoparticules sur substrats solides. L'observation *in situ* à travers ladite cavité, de l'adsorption de particules peut offrir un support expérimental pour étayer la théorie, et/ou peut permettre de choisir rapidement les paramètres les plus adaptés à chaque protocole de nanoxérographie (concentration, temps d'adsorption, etc...). La nanoxérographie consiste à assembler de manière électrostatique des nanoparticules colloïdales chargées et/ou polarisables sur des motifs chargés en surface d'une couche mince d'électret.

D'autres caractéristiques et avantages de la présente invention apparaîtront à la lumière de la description d'exemples non limitatifs de puces selon l'invention faits en référence aux figures.

### EXEMPLES

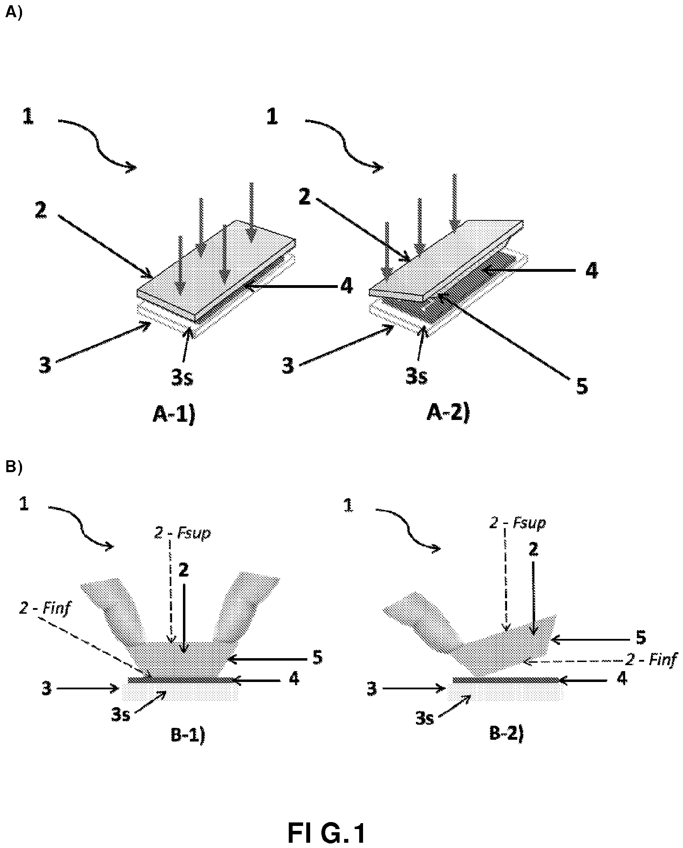

La figure 1 montre une représentation schématique de l'ouverture et de la fermeture d'une puce 1 conforme au premier objet de l'invention. En particulier, la figure 1A est une vue de dessus de la fermeture [figure A-1)] et de l'ouverture [figure A-2)] d'une puce 1 conforme au premier objet de l'invention, et la figure 1B est une vue en coupe de la fermeture [figure B-1)] et de l'ouverture [figure B-2)] d'une puce 1 conforme au premier objet de l'invention.

La puce 1 comprend une partie supérieure 2, une partie inférieure 3 comprenant une structure microfluidique 4. La partie inférieure 3 comprend un support 3s sur lequel une structure microfluidique 4 est déposée. La partie supérieure 2 est configurée pour venir en contact de ladite partie inférieure 3 et fermer ladite puce 1. La partie supérieure 2 comprend des biseaux 5 permettant l'ouverture manuelle de la puce microfluidique, notamment par effet levier. Les biseaux 5 sont orientés de façon à ce que la face supérieure *2-Fsup* de la partie supérieure 2 de la puce soit de plus grande dimension que la face inférieure *2-Finf* de ladite partie supérieure 2 [cf. figures B-1) et B-2)].

L'ouverture et la fermeture de la puce 1 peuvent se faire par simple pression manuelle (flèches verticales dans la figure A-1)) grâce à la capacité d'adhésion de la deuxième couche souple de la partie supérieure 2 de la puce 1, et éventuellement la présence de biseaux 5. Une fermeture étanche et homogène est ainsi assurée par l'adhésion d'au moins une partie de la deuxième couche avec la partie inférieure 3, après application d'une pression homogène sur toute la surface de la puce fermée [figures A-1) et B-1)]. L'ouverture est permise par application d'une pression manuelle (flèches verticales dans la figure A-2)) locale en bord de la puce par effet levier avec les biseaux 5 [figures A-2) et B-2)]. Cette réversibilité permet de déposer par exemple un échantillon dans la puce pour le suivi d'une réaction par voie microfluidique, puis de le récupérer en fin de suivi de réaction et de réutiliser les parties supérieure 2 et inférieure 3 de la puce ensuite. La géométrie des biseaux 5 étant adaptable pour la création de la partie supérieure 2, il est possible de moduler l'adhésion entre les deux parties de la puce 1 et donc la pression de travail lors d'un suivi de réaction (e.g. pression allant de 0 à 1,5 bar environ). Les biseaux 5 sont des moyens mécaniques beaucoup plus simples et moins encombrants qu'un système de serrage conventionnel. En particulier, ils n'empêchent pas l'observation de l'intérieur de la puce. Ils permettent également de limiter le nombre de constituants de la puce 1 et de travailler plus rapidement. Elle peut être complètement transparente ce qui autorise des observations *in-situ* avec des longueurs d'ondes dans tout le domaine visible avec une valeur minimale de 400 nm. On peut donc envisager de faire un suivi de réaction par photoluminescence sous excitation à 450 nm.

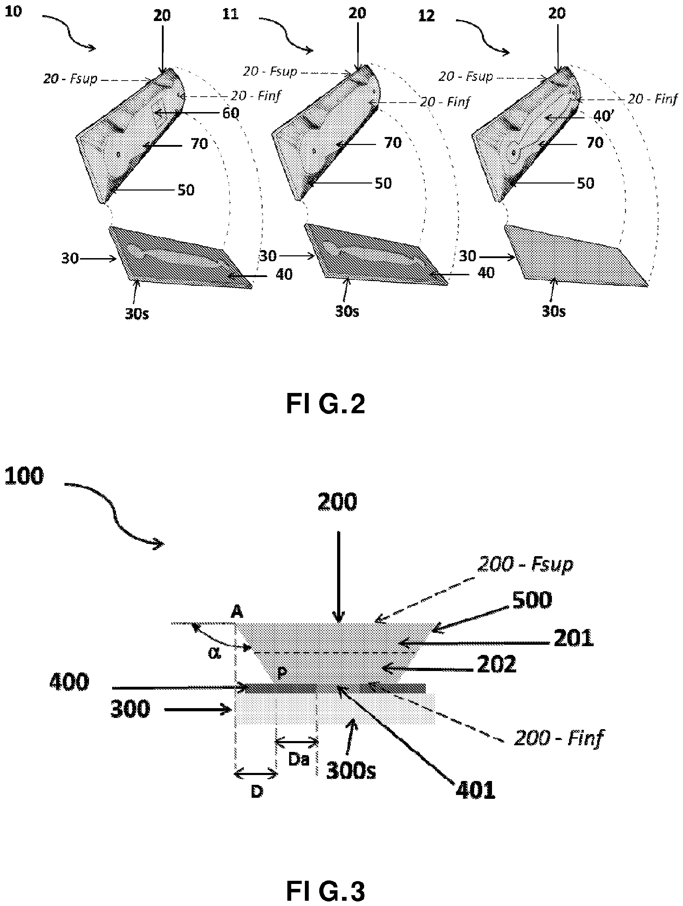

La figure 2 montre trois puces 10, 11, et 12 conformes à l'invention respectivement selon les modes de réalisation « version cavité », « version plane » et « version structure microfluidique ». Les puces 10, 11 et 12 comprennent une partie supérieure 20 comprenant éventuellement une structure microfluidique 40', une partie inférieure 30 comprenant un support 30s sur lequel une structure microfluidique 40 est éventuellement déposée. La partie supérieure 20 est configurée pour venir en contact de ladite partie inférieure 30 et fermer ladite puce 10, 11 ou 12. La partie supérieure 20 comprend des biseaux 50 permettant l'ouverture manuelle de la puce microfluidique, notamment par effet levier. Les biseaux 50 sont orientés de façon à ce que la face supérieure *20-Fsup* de la partie supérieure 20 de la puce soit de plus grande dimension que la face inférieure *20-Finf* de ladite partie supérieure 20. La surface 70 dite « surface d'adhésion » désigne la surface de la face inférieure *20-Finf* de la partie supérieure 20 qui est directement en contact physique avec la partie inférieure 30 de la puce lorsque celle-ci est en configuration fermée. La surface d'adhésion 70 correspond à la partie de la deuxième couche de la partie supérieure directement en contact physique avec la partie inférieure de la puce.

Dans la puce 10, la partie supérieure 20 comprend une cavité 60 ouverte sur la face inférieure *20-Finf,* et la partie inférieure 30 comprend un support 30s sur lequel une structure microfluidique 40 est déposée (puce « version cavité »). Dans la puce 11, la face inférieure *20-Finf* de la partie supérieure 20 a une surface plane, et la partie inférieure 30 comprend un support 30s sur lequel une structure microfluidique 40 est déposée (puce « version plane »). Dans la puce 12, la partie supérieure 20 comprend une structure microfluidique 40' et la partie inférieure 30 dispose d'une surface plane et est constituée d'un support 30s.

La figure 3 est une représentation schématique en coupe d'une puce 100 conforme à l'invention.

La puce 100 comprend une partie supérieure 200, une partie inférieure 300 comprenant un support 300s sur lequel une structure microfluidique 400 comprenant au moins un canal microfluidique (401) est déposée. La partie supérieure 200 est configurée pour venir en contact de ladite partie inférieure 300 et fermer ladite puce 100. La partie supérieure 200 comprend des biseaux 500 permettant l'ouverture manuelle de la puce microfluidique, notamment par effet levier. Les biseaux 500 sont orientés de façon à ce que la face supérieure *200-Fsup* de la partie supérieure 200 de la puce soit de plus grande dimension que la face inférieure *200-Finf* de ladite partie supérieure 200. La partie supérieure 200 comprend au moins une première couche 201 d'un matériau polymère époxyde ayant un module de Young Y₁, et au moins une deuxième couche 202 d'un matériau polymère époxyde ayant un module de Young Y₂, lesdits modules de Young Y₁ et Y₂ étant tels que définis dans l'invention. Au moins une partie de ladite deuxième couche 202 (surface d'adhésion) est directement en contact physique avec la partie inférieure 300 de ladite puce 100 lorsque la puce est en configuration fermée.

L'angle α des biseaux, par rapport à la face supérieure *200-Fsup* de la partie supérieure 200 de la puce 100, est préférentiellement entre 130 et 160°.

P est défini comme étant le « point pivot », et A est défini comme étant le point de pression d'ouverture de la puce. La largeur D des biseaux est définie comme la distance entre le point pivot P et la résultante (ou projection) du point de pression d'ouverture A sur la partie inférieure 300. La largeur D est de 5 mm environ, lorsque l'angle α est de 130°, et de 1 cm environ, lorsque l'angle α est de 160°.

La largeur d'adhésion Da est définie comme la distance entre le point pivot P et le début d'un canal microfluidique (401).

D'autres puces sont envisageables selon l'invention, notamment une puce dans laquelle les parties inférieure et supérieure comprennent chacune une structure microfluidique et/ou des structures microfluidiques sur plusieurs étages.

### Exemple 1 : fabrication d'une puce « version plane »

### 1.1 Fabrication d'un modèle de la partie supérieure « version plane »

Un premier morceau de PMMA rectangulaire de dimensions 76x26x5 mm est préparé et taillé à l'aide d'une perceuse avec des têtes à défoncer (de type Dremel), de manière à créer des biseaux. Ce premier morceau de PMMA représente le modèle de la partie supérieure « version plane ».

### 1.2 Fabrication d'un moule de la partie supérieure « version plane »

Un deuxième morceau de PMMA rectangulaire de dimensions 96x46x5 mm est préparé. Un morceau de ruban adhésif d'environ 5 cm de large est collé sur une partie du morceau de PMMA, de manière à servir de coffrage pour le moule. Une composition réticulable de PDMS commercialisée sous la référence Sylgard 184 est ensuite coulée sur le morceau de PMMA, de manière à former une première couche de PDMS d'épaisseur d'environ 5 à 10 mm déposée sur le morceau de PMMA. L'ensemble est laissé à 60°C pendant 40 à 60 minutes, puis une composition réticulable de PDMS commercialisée sous la référence Sylgard 184 est coulée sur la couche de PDMS formée précédemment, de manière à former une deuxième couche de PDMS. Tant que cette deuxième couche est encore liquide, le modèle de la partie supérieure « version plane » précédemment obtenu est incorporé dans la deuxième couche de PDMS jusqu'à qu'il soit totalement immergé, la face biseautée du modèle vers le bas. Puis, l'ensemble est laissé à 60°C pendant 24h. Ensuite, le surplus de PDMS au-dessus du modèle est découpé et le modèle est démoulé à l'air comprimé.

### 1.3 Fabrication d'une partie supérieure « version plane »

2 g d'une résine époxyde vendue sous la dénomination commerciale EC251 est mélangée avec 1 g d'un durcisseur vendu sous la dénomination commerciale W242.

La composition réticulable B obtenue est dégazée, puis 2 g sont versés dans le moule obtenu dans l'exemple 1.2 ci-dessus, de manière à recouvrir totalement le fond du moule. La composition réticulable B est laissée réticuler à température ambiante pendant 4 heures.

En parallèle, 6 g d'une résine époxyde vendue sous la dénomination commerciale EC161 est mélangée avec 3 g d'un durcisseur vendu sous la dénomination commerciale W242. La composition réticulable A obtenue est dégazée, puis 6 g de cette composition réticulable A sont versés sur la composition réticulable B dans le moule avant que la composition B n'ait terminé de réticuler. Les compositions réticulables A et B sont alors laissées réticuler pendant 24h.

La partie supérieure ainsi obtenue est démoulée à l'air comprimé, puis percée pour former des orifices d'entrées et de sorties d'écoulement, à l'aide d'un outil de type dremel.

### 1.4 Fabrication d'une puce « version plane »

La partie inférieure est fabriquée par laminage d'une résine photosensible sur une lame de verre et photolithographie, en condition inactinique. Pour ce faire, une lame de microscope de dimensions 76x26x1,2 mm est nettoyée, puis chauffée 1 à 2 minutes à 100°C. Elle est ensuite nettoyée avec un plasma. Une résine photosensible commercialisée sous la référence DF-3050 par Engineered Materials Systems Inc. est déposée sur la lame de verre par laminage à une vitesse de 1 cm/s environ et à une température de 98°C. Une lame de verre recouverte d'un masque contenant les motifs des micro-canaux est ensuite déposé sur la lame de verre laminée, et l'ensemble est insolé à l'aide d'un appareil vendu sous la dénomination commerciale UV-KUB 3, pendant 9 secondes à 100% de puissance. Puis, le masque est retiré, la lame laminée est recuite à 100°C pendant 10 minutes, et développée dans du cyclohexanone entre 9 à 11 minutes. L'ensemble obtenu est recuit à 175°C pendant 1h.

La surface d'adhésion de la partie supérieure destinée à être en contact avec la partie inférieure de la puce est aspergée d'acétone puis séchée à l'air comprimé. La partie supérieure est ensuite positionnée sur la partie inférieure comprenant la structure microfluidique. La puce est alors fermée par simple pression des doigts sur la partie supérieure.

### Exemple 2 : fabrication d'une puce « version structure microfluidique »

### 2.1 Fabrication d'un modèle de la partie supérieure « version structure microfluidique »

Une lame de microscope de dimensions 76x26x1,2 mm est nettoyée, puis chauffée 1 à 2 minutes à 100°C. Elle est ensuite nettoyée avec un plasma. Une résine photosensible commercialisée sous la référence DF-3050 par Engineered Materials Systems Inc. est déposée sur la lame de verre par laminage à une vitesse de quelques cm/s et à une température de 98°C. Une lame de verre recouverte d'un masque contenant les motifs des micro-canaux est ensuite déposé sur la lame de verre laminée, et l'ensemble est insolé à l'aide d'un appareil vendu sous la dénomination commerciale UV-KUB 3, pendant 9 secondes à 100% de puissance. Puis, le masque est retiré, la lame laminée est recuite à 100°C pendant 10 minutes, et développée dans du cyclohexanone entre 9 à 11 minutes. L'ensemble obtenu est recuit à 175°C pendant 1h. On obtient une lame de verre comprenant des reliefs de la résine photosensible représentant le négatif de la structure microfluidique finale.

En parallèle, un morceau de PMMA rectangulaire de dimensions 96x46x5 mm est préparé. Un morceau de ruban adhésif d'environ 5 cm de large est collé sur une partie du morceau de PMMA, de manière à servir de coffrage pour le moule. Une composition réticulable de PDMS commercialisée sous la référence Sylgard 184 est ensuite coulée sur le morceau de PMMA, de manière à former une première couche de PDMS d'épaisseur d'environ 5 à 10 mm déposée sur le morceau de PMMA. L'ensemble est laissé à 60°C pendant 40 à 60 minutes, puis il est laissé refroidir à température ambiante. Une composition réticulable de PDMS commercialisée sous la référence Sylgard 184 est coulée sur la couche de PDMS formée précédemment, de manière à former une deuxième couche de PDMS. Tant que cette deuxième couche est encore liquide, la lame de verre comprenant des reliefs de la résine photosensible précédemment obtenue est déposée sur la première couche de PDMS, jusqu'à ce qu'elle soit totalement immergée, les reliefs étant positionnés vers le bas (i.e. face photolithographiée vers le bas). Puis, l'ensemble est laissé à température ambiante pendant 48h. Ensuite, le surplus de PDMS au-dessus de la lame de verre et des reliefs est découpé, et retiré avec la lame de verre, et un pré-moule est obtenu.

Ensuite, une composition réticulable comprenant une résine époxyde commercialisée sous la référence EC 161 et un durcisseur vendu sous la dénomination commerciale W242, le rapport massique durcisseur/résine époxyde étant de 1/2, est versée dans le pré-moule. L'ensemble est laissé pendant 48h à température ambiante, puis la partie en résine époxyde est démoulée à l'air comprimé. Cette partie en résine époxyde est taillée à l'aide d'une perceuse avec des têtes à défoncer (de type Dremel), de manière à créer des biseaux, pour former un modèle de la partie supérieure « version structure microfluidique ».

### 2.2 Fabrication d'un moule de la partie supérieure « version structure microfluidique »

Un morceau de PMMA rectangulaire de dimensions 96x46x5 mm est préparé. Un morceau de ruban adhésif d'environ 5 cm de large est collé sur une partie du morceau de PMMA, de manière à servir de coffrage pour le moule. Une composition réticulable de PDMS commercialisée sous la référence Sylgard 184 est ensuite coulée sur le morceau de PMMA, de manière à former une première couche de PDMS déposée sur le morceau de PMMA. L'ensemble est laissé à 60°C pendant 40 à 60 minutes avant d'être laissé refroidir jusqu'à la température ambiante, puis une composition réticulable de PDMS commercialisée sous la référence Sylgard 184 est coulée sur la couche de PDMS formée précédemment, de manière à former une deuxième couche de PDMS. Tant que cette deuxième couche est encore liquide, le modèle de la partie supérieure « version structure microfluidique » précédemment obtenu est incorporé dans la deuxième couche de PDMS jusqu'à qu'il soit totalement immergé, la face inférieure du modèle de la partie supérieure vers le bas. Puis, l'ensemble est laissé à température ambiante pendant 48h. Ensuite, le surplus de PDMS au-dessus du modèle est découpé et le modèle est démoulé à l'air comprimé.

### 2.3 Fabrication d'une partie supérieure « version structure microfluidique »

2 g d'une résine époxyde vendue sous la dénomination commerciale EC251 est mélangée avec 1 g d'un durcisseur vendu sous la dénomination commerciale W242. La composition réticulable B obtenue est dégazée, puis 2 g sont versés dans le moule obtenu dans l'exemple 2.2 ci-dessus, de manière à recouvrir totalement le fond du moule. La composition réticulable B est laissée réticuler à température ambiante pendant 4 heures.

En parallèle, 6 g d'une résine époxyde vendue sous la dénomination commerciale EC161 est mélangée avec 3 g d'un durcisseur vendu sous la dénomination commerciale W242. La composition réticulable A obtenue est dégazée, puis 6 g de cette composition réticulable A sont versés sur la composition réticulable B dans le moule. Les compositions réticulables A et B sont laissées réticuler pendant 24h à température ambiante.

La partie supérieure ainsi obtenue est démoulée à l'air comprimé, puis percée pour former des orifices d'entrées et de sorties d'écoulement.

### 2.4 Fabrication d'une puce « version structure microfluidique »

Une lame de verre simple de dimensions 26x76x1,2 mm est utilisée comme partie inférieure.

La surface d'adhésion de la partie supérieure destinée à être en contact avec la partie inférieure de la puce est aspergée d'acétone quelques secondes, puis séchée à l'air comprimé. La partie supérieure comprenant la structure microfluidique est ensuite positionnée sur la partie inférieure. La puce est alors fermée par simple pression des doigts sur la partie supérieure.

### Exemple 3 : fabrication d'une puce « version cavité »

### 3.1 Fabrication d'un modèle de la partie supérieure « version cavité »

Le moule de la partie supérieure « version plane » tel que fabriqué dans l'exemple 1.2 ci-dessus est utilisé comme pré-moule pour préparer le modèle de la partie supérieure « version cavité ». Pour ce faire, un objet de dimensions 10x10x3 mm comprenant une partie aimantée (les dimensions de l'objet sont celles que l'on souhaite ensuite obtenir pour la cavité) est positionné dans le pré-moule à l'emplacement souhaité. Un aimant est positionné sous le pré-moule pour assurer le contact de l'objet au pré-moule. Les deux aimants s'attirant, le passage sous l'objet de la composition réticulable telle que décrite ci-après est limité.

Ensuite, une composition réticulable comprenant une résine époxyde commercialisée sous la référence EC 161 et un durcisseur vendu sous la dénomination commerciale W242, le rapport massique durcisseur/résine époxyde étant de 1/2, est versée dans le pré-moule, de sorte à immerger l'objet. L'ensemble est laissé pendant 48h à température ambiante, l'aimant sous le pré-moule est retiré, la partie en résine époxyde entourant l'objet et l'objet sont démoulés ensemble à l'air comprimé, et l'objet est retiré à l'aide d'un aimant pour former un modèle de la partie supérieure « version cavité ».

### 3.2 Fabrication d'un moule de la partie supérieure « version cavité »

Un morceau de PMMA rectangulaire de dimensions 96x46x5 mm est préparé. Un morceau de ruban adhésif d'environ 5 cm de large est collé sur une partie du morceau de PMMA, de manière à servir de coffrage pour le moule. Une composition réticulable de PDMS commercialisée sous la référence Sylgard 184 est ensuite coulée sur le morceau de PMMA, de manière à former une première couche de PDMS déposée sur le morceau de PMMA. L'ensemble est laissé à 60°C pendant 40 à 60 minutes, puis une composition réticulable de PDMS commercialisée sous la référence Sylgard 184 est coulée sur la couche de PDMS formée précédemment, de manière à former une deuxième couche de PDMS. Tant que cette deuxième couche est encore liquide, le modèle de la partie supérieure « version cavité » précédemment obtenu est incorporé dans la deuxième couche de PDMS jusqu'à qu'il soit totalement immergé, la face inférieure du modèle de la partie supérieure vers le bas. Puis, l'ensemble est laissé à 60°C pendant 24h. Ensuite, le surplus de PDMS au-dessus du modèle est découpé et le modèle est démoulé à l'air comprimé.

### 3.3 Fabrication d'une partie supérieure « version cavité »

2 g d'une résine époxyde vendue sous la dénomination commerciale EC251 est mélangée avec 1 g d'un durcisseur vendu sous la dénomination commerciale W242. La composition réticulable B obtenue est dégazée, puis 2 g sont versés dans le moule obtenu dans l'exemple 3.2 ci-dessus, de manière à recouvrir totalement le fond du moule. La composition réticulable B est laissée réticuler à température ambiante pendant 4 heures.

En parallèle, 6 g d'une résine époxyde vendue sous la dénomination commerciale EC161 est mélangée avec 3 g d'un durcisseur vendu sous la dénomination commerciale W242. La composition réticulable A obtenue est dégazée, puis 6 g de cette composition réticulable A sont versés sur la composition réticulable B dans le moule. Les compositions réticulables A et B sont laissées réticuler pendant 24h.

La partie supérieure de la puce ainsi obtenue est démoulée à l'air comprimé, puis percée pour former des orifices d'entrées et de sorties d'écoulement, à l'aide d'un outil de type dremel.

### 3.4 Fabrication d'une puce « version cavité »

La partie inférieure est fabriquée par spin coating d'une résine photosensible sur une lame de verre et photolithographie, en condition inactinique. La méthode utilisée dans l'exemple 1 peut également être mise en oeuvre.

Pour ce faire, une lame de microscope de dimensions 76x26x1,2 mm est utilisée. Un composé commercialisé sous la référence AZ1512HS par MicroChemicals est déposé par spincoating à une vitesse de 5000 tours minute et à température ambiante. Puis, la lame spincoatée est recuite à 100°C pendant 2 minutes et insolée à l'aide d'un appareil vendu sous la dénomination commerciale digital SmartPrint muni d'un objectif 1x : 10,2 mW/cm² pendant 15 secondes à 150 mJ/cm² de puissance. Puis, la lame spincoatée est développée dans une solution aqueuse à 50% volumique d'AZ1500 pendant 45 secondes, et lavée dans un bain d'eau déminéralisée. L'ensemble obtenu est séché puis recuit à 110°C pendant 1 min.

La surface d'adhésion de la partie supérieure destinée à être en contact avec la partie inférieure de la puce est aspergée d'acétone quelques secondes puis séchée à l'air comprimé. L'objet ou échantillon à analyser est placé dans la cavité avec un aimant de même format que celui utilisé pour faire le modèle. La partie supérieure comprenant la cavité est ensuite positionnée sur la partie inférieure. La puce est alors fermée par simple pression des doigts sur la partie supérieure.

### Exemple 4 : fabrication d'une puce « version plane »

### 4.1 Fabrication d'un modèle de la partie supérieure « version plane »

Un premier morceau de PMMA rectangulaire de dimensions 76x26x5 mm est préparé et taillé à l'aide d'une perceuse avec des têtes à défoncer (de type Dremel), de manière à créer des biseaux. Ce premier morceau de PMMA représente le modèle de la partie supérieure « version plane ».

### 4.2 Fabrication d'un moule de la partie supérieure « version plane »

Un deuxième morceau de PMMA rectangulaire de dimensions 96x46x5 mm est préparé. Un morceau de ruban adhésif d'environ 5 cm de large est collé sur une partie du morceau de PMMA, de manière à servir de coffrage pour le moule. Une composition réticulable de PDMS commercialisée sous la référence Sylgard 184 est ensuite coulée sur le morceau de PMMA, de manière à former une première couche de PDMS d'épaisseur d'environ 5 à 10 mm déposée sur le morceau de PMMA. L'ensemble est laissé à 60°C pendant 40 à 60 minutes, puis une composition réticulable de PDMS commercialisée sous la référence Sylgard 184 est coulée sur la couche de PDMS formée précédemment, de manière à former une deuxième couche de PDMS. Tant que cette deuxième couche est encore liquide, le modèle de la partie supérieure «version plane» précédemment obtenu est incorporé dans la deuxième couche de PDMS jusqu'à qu'il soit totalement immergé, la face biseautée du modèle vers le bas. Puis, l'ensemble est laissé à 60°C pendant 24h. Ensuite, le surplus de PDMS au-dessus du modèle est découpé et le modèle est démoulé à l'air comprimé.

### 4.3 Fabrication d'une partie supérieure « version plane »

2 g d'une résine époxyde vendue sous la dénomination commerciale WWAS est mélangée avec 0,54 g d'un durcisseur vendu sous la dénomination commerciale WWB4.

La composition réticulable B obtenue est dégazée, puis 2 g sont versés dans le moule obtenu dans l'exemple 4.2 ci-dessus, de manière à recouvrir totalement le fond du moule. La composition réticulable B est laissée réticuler à température ambiante pendant 1 heure.

En parallèle, 6 g d'une résine époxyde vendue sous la dénomination commerciale WWAS est mélangée avec 2,4 g d'un durcisseur vendu sous la dénomination commerciale WWB4. La composition réticulable A obtenue est dégazée, puis 6 g de cette composition réticulable A sont versés sur la composition réticulable B dans le moule avant que la composition B n'ait terminé de réticuler. Les compositions réticulables A et B sont alors laissées réticuler pendant 24h.

La partie supérieure ainsi obtenue est démoulée à l'air comprimé, puis percée pour former des orifices d'entrées et de sorties d'écoulement, à l'aide d'un outil de type dremel.

### 4.4 Fabrication d'une puce « version plane »

La partie inférieure est fabriquée par laminage d'une résine photosensible sur une lame de verre et photolithographie, en condition inactinique. Pour ce faire, une lame de microscope de dimensions 76x26x1,2 mm est nettoyée, puis chauffée 1 à 2 minutes à 100°C. Elle est ensuite nettoyée avec un plasma. Une résine photosensible commercialisée sous la référence DF-3050 par Engineered Materials Systems Inc. est déposée sur la lame de verre par laminage à une vitesse de 1 cm/s environ et à une température de 98°C. Une lame de verre recouverte d'un masque contenant les motifs des micro-canaux est ensuite déposé sur la lame de verre laminée, et l'ensemble est insolé à l'aide d'un appareil vendu sous la dénomination commerciale UV-KUB 3, pendant 9 secondes à 100% de puissance. Puis, le masque est retiré, la lame laminée est recuite à 100°C pendant 10 minutes, et développée dans du cyclohexanone entre 9 à 11 minutes. L'ensemble obtenu est recuit à 175°C pendant 1h.

La surface d'adhésion de la partie supérieure destinée à être en contact avec la partie inférieure de la puce est aspergée d'acétone puis séchée à l'air comprimé. La partie supérieure est ensuite positionnée sur la partie inférieure comprenant la structure microfluidique. La puce est alors fermée par simple pression des doigts sur la partie supérieure.

### Exemple 5 : fabrication d'une puce « version structure microfluidique »

### 5.1 Fabrication d'un modèle de la partie supérieure « version structure microfluidique »

Une lame de microscope de dimensions 76x26x1,2 mm est nettoyée, puis chauffée 1 à 2 minutes à 100°C. Elle est ensuite nettoyée avec un plasma. Une résine photosensible commercialisée sous la référence DF-3050 par Engineered Materials Systems Inc. est déposée sur la lame de verre par laminage à une vitesse de quelques cm/s et à une température de 98°C. Une lame de verre recouverte d'un masque contenant les motifs des micro-canaux est ensuite déposé sur la lame de verre laminée, et l'ensemble est insolé à l'aide d'un appareil vendu sous la dénomination commerciale UV-KUB 3, pendant 9 secondes à 100% de puissance. Puis, le masque est retiré, la lame laminée est recuite à 100°C pendant 10 minutes, et développée dans du cyclohexanone entre 9 à 11 minutes. L'ensemble obtenu est recuit à 175°C pendant 1h. On obtient une lame de verre comprenant des reliefs de la résine photosensible représentant le négatif de la structure microfluidique finale.

En parallèle, un morceau de PMMA rectangulaire de dimensions 96x46x5 mm est préparé. Un morceau de ruban adhésif d'environ 5 cm de large est collé sur une partie du morceau de PMMA, de manière à servir de coffrage pour le moule. Une composition réticulable de PDMS commercialisée sous la référence Sylgard 184 est ensuite coulée sur le morceau de PMMA, de manière à former une première couche de PDMS d'épaisseur d'environ 5 à 10 mm déposée sur le morceau de PMMA. L'ensemble est laissé à 60°C pendant 40 à 60 minutes, puis il est laissé refroidir à température ambiante. Une composition réticulable de PDMS commercialisée sous la référence Sylgard 184 est coulée sur la couche de PDMS formée précédemment, de manière à former une deuxième couche de PDMS. Tant que cette deuxième couche est encore liquide, la lame de verre comprenant des reliefs de la résine photosensible précédemment obtenue est déposée sur la première couche de PDMS, jusqu'à ce qu'elle soit totalement immergée, les reliefs étant positionnés vers le bas (i.e. face photolithographiée vers le bas). Puis, l'ensemble est laissé à température ambiante pendant 48h. Ensuite, le surplus de PDMS au-dessus de la lame de verre et des reliefs est découpé, et retiré avec la lame de verre, et un pré-moule est obtenu.

Ensuite, une composition réticulable comprenant une résine époxyde commercialisée sous la référence WWAS et un durcisseur vendu sous la dénomination commerciale WWB4, le rapport massique durcisseur/résine époxyde étant de 100/40, est versée dans le pré-moule. L'ensemble est laissé pendant 48h à température ambiante, puis la partie en résine époxyde est démoulée à l'air comprimé. Cette partie en résine époxyde est taillée à l'aide d'une perceuse avec des têtes à défoncer (de type Dremel), de manière à créer des biseaux, pour former un modèle de la partie supérieure « version structure microfluidique ».

### 5.2 Fabrication d'un moule de la partie supérieure « version structure microfluidique »

Un morceau de PMMA rectangulaire de dimensions 96x46x5 mm est préparé. Un morceau de ruban adhésif d'environ 5 cm de large est collé sur une partie du morceau de PMMA, de manière à servir de coffrage pour le moule. Une composition réticulable de PDMS commercialisée sous la référence Sylgard 184 est ensuite coulée sur le morceau de PMMA, de manière à former une première couche de PDMS déposée sur le morceau de PMMA. L'ensemble est laissé à 60°C pendant 40 à 60 minutes avant d'être laissé refroidir jusqu'à la température ambiante, puis une composition réticulable de PDMS commercialisée sous la référence Sylgard 184 est coulée sur la couche de PDMS formée précédemment, de manière à former une deuxième couche de PDMS. Tant que cette deuxième couche est encore liquide, le modèle de la partie supérieure « version structure microfluidique » précédemment obtenu est incorporé dans la deuxième couche de PDMS jusqu'à qu'il soit totalement immergé, la face inférieure du modèle de la partie supérieure vers le bas. Puis, l'ensemble est laissé à température ambiante pendant 48h. Ensuite, le surplus de PDMS au-dessus du modèle est découpé et le modèle est démoulé à l'air comprimé.

### 5.3 Fabrication d'une partie supérieure «version structure microfluidique »

2 g d'une résine époxyde vendue sous la dénomination commerciale WWAS est mélangée avec 0,54 g d'un durcisseur vendu sous la dénomination commerciale WWB4. La composition réticulable B obtenue est dégazée, puis 2 g sont versés dans le moule obtenu dans l'exemple 5.2 ci-dessus, de manière à recouvrir totalement le fond du moule. La composition réticulable B est laissée réticuler à température ambiante pendant 1 heure.

En parallèle, 6 g d'une résine époxyde vendue sous la dénomination commerciale WWAS est mélangée avec 2,4 g d'un durcisseur vendu sous la dénomination commerciale WWB4. La composition réticulable A obtenue est dégazée, puis 6 g de cette composition réticulable A sont versés sur la composition réticulable B dans le moule. Les compositions réticulables A et B sont laissées réticuler pendant 24h à température ambiante.

La partie supérieure ainsi obtenue est démoulée à l'air comprimé, puis percée pour former des orifices d'entrées et de sorties d'écoulement.

### 5.4 Fabrication d'une puce « version structure microfluidiaue »

Une lame de verre simple de dimensions 26x76x1,2 mm est utilisée comme partie inférieure.

La surface d'adhésion de la partie supérieure destinée à être en contact avec la partie inférieure de la puce est aspergée d'acétone quelques secondes, puis séchée à l'air comprimé. La partie supérieure comprenant la structure microfluidique est ensuite positionnée sur la partie inférieure. La puce est alors fermée par simple pression des doigts sur la partie supérieure.

### Exemple 6 : fabrication d'une puce « version cavité »

### 6.1 Fabrication d'un modèle de la partie supérieure « version cavité »

Le moule de la partie supérieure « version plane » tel que fabriqué dans l'exemple 4.2 ci-dessus est utilisé comme pré-moule pour préparer le modèle de la partie supérieure « version cavité ». Pour ce faire, un objet de dimensions 10x10x3 mm comprenant une partie aimantée (les dimensions de l'objet sont celles que l'on souhaite ensuite obtenir pour la cavité) est positionné dans le pré-moule à l'emplacement souhaité. Un aimant est positionné sous le pré-moule pour assurer le contact de l'objet au pré-moule. Les deux aimants s'attirant, le passage sous l'objet de la composition réticulable telle que décrite ci-après est limité.

Ensuite, une composition réticulable comprenant une résine époxyde commercialisée sous la référence WWAS et un durcisseur vendu sous la dénomination commerciale WWB4, le rapport massique durcisseur/résine époxyde étant de 100/40, est versée dans le pré-moule, de sorte à immerger l'objet. L'ensemble est laissé pendant 48h à température ambiante, l'aimant sous le pré-moule est retiré, la partie en résine époxyde entourant l'objet et l'objet sont démoulés ensemble à l'air comprimé, et l'objet est retiré à l'aide d'un aimant pour former un modèle de la partie supérieure « version cavité ».

### 6.2 Fabrication d'un moule de la partie supérieure « version cavité »

Un morceau de PMMA rectangulaire de dimensions 96x46x5 mm est préparé. Un morceau de ruban adhésif d'environ 5 cm de large est collé sur une partie du morceau de PMMA, de manière à servir de coffrage pour le moule. Une composition réticulable de PDMS commercialisée sous la référence Sylgard 184 est ensuite coulée sur le morceau de PMMA, de manière à former une première couche de PDMS déposée sur le morceau de PMMA. L'ensemble est laissé à 60°C pendant 40 à 60 minutes, puis une composition réticulable de PDMS commercialisée sous la référence Sylgard 184 est coulée sur la couche de PDMS formée précédemment, de manière à former une deuxième couche de PDMS. Tant que cette deuxième couche est encore liquide, le modèle de la partie supérieure « version cavité » précédemment obtenu est incorporé dans la deuxième couche de PDMS jusqu'à qu'il soit totalement immergé, la face inférieure du modèle de la partie supérieure vers le bas. Puis, l'ensemble est laissé à 60°C pendant 24h. Ensuite, le surplus de PDMS au-dessus du modèle est découpé et le modèle est démoulé à l'air comprimé.

### 6.3 Fabrication d'une partie supérieure « version cavité »

2 g d'une résine époxyde vendue sous la dénomination commerciale WWAS est mélangée avec 0,54 g d'un durcisseur vendu sous la dénomination commerciale WWB4. La composition réticulable B obtenue est dégazée, puis 2 g sont versés dans le moule obtenu dans l'exemple 6.2 ci-dessus, de manière à recouvrir totalement le fond du moule. La composition réticulable B est laissée réticuler à température ambiante pendant 1 heure.

En parallèle, 6 g d'une résine époxyde vendue sous la dénomination commerciale WWAS est mélangée avec 2,4 g d'un durcisseur vendu sous la dénomination commerciale WWB4. La composition réticulable A obtenue est dégazée, puis 6 g de cette composition réticulable A sont versés sur la composition réticulable B dans le moule. Les compositions réticulables A et B sont laissées réticuler pendant 24h.

La partie supérieure de la puce ainsi obtenue est démoulée à l'air comprimé, puis percée pour former des orifices d'entrées et de sorties d'écoulement, à l'aide d'un outil de type dremel.

### 6.4 Fabrication d'une puce « version cavité »

La partie inférieure est fabriquée par spin coating d'une résine photosensible sur une lame de verre et photolithographie, en condition inactinique. La méthode utilisée dans l'exemple 4 peut également être mise en oeuvre.

Pour ce faire, une lame de microscope de dimensions 76x26x1,2 mm est utilisée. Un composé commercialisé sous la référence AZ1512HS par MicroChemicals est déposé par spincoating à une vitesse de 5000 tours minute et à température ambiante. Puis, la lame spincoatée est recuite à 100°C pendant 2 minutes et insolée à l'aide d'un appareil vendu sous la dénomination commerciale digital SmartPrint muni d'un objectif 1x : 10,2 mW/cm² pendant 15 secondes à 150 mJ/cm² de puissance. Puis, la lame spincoatée est développée dans une solution aqueuse à 50% volumique d'AZ1500 pendant 45 secondes, et lavée dans un bain d'eau déminéralisée. L'ensemble obtenu est séché puis recuit à 110°C pendant 1 min.

La surface d'adhésion de la partie supérieure destinée à être en contact avec la partie inférieure de la puce est aspergée d'acétone quelques secondes puis séchée à l'air comprimé. L'objet ou échantillon à analyser est placé dans la cavité avec un aimant de même format que celui utilisé pour faire le modèle. La partie supérieure comprenant la cavité est ensuite positionnée sur la partie inférieure. La puce est alors fermée par simple pression des doigts sur la partie supérieure.

Lorsque l'on souhaite fabriquer d'autres puces telles que décrites dans les exemples 1, 2, 3, 4, 5 et 6, les deux premières étapes ne sont pas nécessaires puisque les moules des parties supérieures ont déjà été fabriqués. Cela réduit considérablement le temps de fabrication des puces. Par ailleurs, si l'on souhaite travailler plusieurs fois avec une puce identique, la puce est réutilisable ce qui réduit d'avantage les temps de microfabrication.

Pour ouvrir les puces telles que fabriquées dans les exemples 1, 2, 3, 4, 5 et 6, il suffit de déconnecter la puce de toute arrivée et sortie de fluides, de positionner la puce sur un support horizontal, de sorte que la partie inférieure soit plaquée audit support (paillasse, table, etc...). Puis, avec les deux pouces, une pression homogène sur un des côtés de la puce est appliquée pour que les biseaux fassent bras de levier. La pression est maintenue jusqu'à l'ouverture de la puce.

## Revendications

1. Puce microfluidique ouvrable et refermable de manière réversible (1, 10, 11, 12, 100) comprenant au moins une partie inférieure (3, 30, 300) et au moins une partie supérieure (2, 20, 200) configurée pour venir en contact de ladite partie inférieure (3, 30, 300) et fermer ladite puce, ladite partie inférieure (3, 30, 300) et/ou ladite partie supérieure (2, 20, 200) comprenant une structure microfluidique (4, 40, 40', 400),
**caractérisée en ce que :**
^{∗} ladite partie supérieure (2, 20, 200) comprend au moins une première couche (201) d'un matériau polymère époxyde ayant un module de Young Y₁ mesuré à une température comprise entre 20 et 25°C, et au moins une deuxième couche (202) d'un matériau polymère époxyde ayant un module de Young Y₂ mesuré à une température comprise entre 20 et 25°C, lesdites première et deuxième couches (201, 202) étant telles que :
- le rapport Y₁/Y₂ est supérieur ou égal à 50,
- Y₂ est inférieur ou égal à 50 MPa,
^{∗} au moins une partie de ladite deuxième couche (202) est directement en contact physique avec la partie inférieure (3, 30, 300) de ladite puce lorsque la puce est en configuration fermée,
^{∗} le module de Young Y₁ de la première couche (201) est d'au moins 0,1 GPa,
^{∗} la deuxième couche (202) a une épaisseur allant de 0,2 mm à 2 mm, et
^{∗} la partie inférieure (3, 30, 300) comprend un matériau rigide ayant un module de Young Y'₃ mesuré à une température comprise entre 20 et 25°C tel que Y'₃ ≥ Y₁.

2. Puce selon la revendication 1, **caractérisée en ce que** le module de Young Y₁ de la première couche (201) est d'au moins 0,5 GPa, de façon particulièrement préférée d'au moins 1 GPa, et de façon plus particulièrement préférée d'au moins 1,5 GPa.

3. Puce selon la revendication 1 ou 2, **caractérisée en ce que** :
^{∗} le matériau polymère époxyde de la première couche (201) est obtenu par polyaddition d'une composition réticulable A comprenant au moins un premier précurseur époxyde choisi parmi les produits de réaction de condensation de l'épichlorhydrine avec un polyphénol, au moins un deuxième précurseur époxyde choisi parmi les résines époxydes aliphatiques d'éthers diglycidyliques et les produits de réaction de condensation de l'épichlorhydrine avec un polyphénol, et au moins un durcisseur, et
^{∗} le matériau polymère époxyde de la deuxième couche (202) est obtenu par polyaddition d'une composition réticulable B comprenant au moins un premier précurseur époxyde choisi parmi les produits de réaction de condensation de l'épichlorhydrine avec un polyphénol, au moins un deuxième précurseur époxyde choisi parmi les résines époxydes aliphatiques d'éthers diglycidyliques et les produits de réaction de condensation de l'épichlorhydrine avec un polyphénol, et au moins un durcisseur.

4. Puce selon l'une quelconque des revendications précédentes, **caractérisée en ce que** le module de Young Y'₃ est d'au moins 0,1 GPa, de préférence d'au moins 0,5 GPa, de façon particulièrement préférée d'au moins 1 GPa, et de façon plus particulièrement préférée d'au moins 1,5 GPa.

5. Puce selon l'une quelconque des revendications précédentes, **caractérisée en ce que** la partie supérieure (2, 20, 200) est un élément transparent.

6. Puce selon l'une quelconque des revendications précédentes, **caractérisée en ce que** la partie supérieure (2, 20, 200) comprend des moyens mécaniques (5, 50, 500) configurés pour ouvrir manuellement la puce microfluidique, de préférence par effet levier.

7. Puce selon la revendication 6, **caractérisée en ce que** la partie supérieure (2, 20, 200) comprend une face supérieure (2-Fsup, 20-Fsup, 200-Fsup) qui correspond à la face supérieure de la puce, et une face inférieure (2-Finf, 20-Finf, 200-Finf) qui correspond à la face qui vient en contact de la partie inférieure de la puce et ferme ladite puce, et **en ce que** les moyens mécaniques sont des biseaux (5, 50, 500) orientés de façon à ce que la face supérieure (2-Fsup, 20-Fsup, 200-Fsup) de la partie supérieure (2, 20, 200) de la puce soit de plus grande dimension que la face inférieure (2-Finf, 20-Finf, 200-Finf) de ladite partie supérieure (2, 20, 200).

8. Puce selon l'une quelconque des revendications précédentes, **caractérisée en ce que** la partie inférieure (3, 30, 300) de la puce comprend une structure microfluidique (4, 40, 400).

9. Puce selon la revendication 8, **caractérisée en ce que** la partie supérieure (2, 20, 200) de la puce comprend une face supérieure (2-Fsup, 20-Fsup, 200-Fsup) qui correspond à la face supérieure de la puce, et une face inférieure (2-Finf, 20-Finf, 200-Finf) qui correspond à la face qui vient en contact de la partie inférieure de la puce et ferme ladite puce, et **en ce que** la face inférieure (2-Finf, 20-Finf, 200-Finf) de la partie supérieure a une surface plane.

10. Puce selon la revendication 8, **caractérisée en ce que** la partie supérieure (2, 20, 200) de la puce comprend une face supérieure (2-Fsup, 20-Fsup, 200-Fsup) qui correspond à la face supérieure de la puce, et une face inférieure (2-Finf, 20-Finf, 200-Finf) qui correspond à la face qui vient en contact de la partie inférieure de la puce et ferme ladite puce, et **en ce que** la partie supérieure (2, 20, 200) comprend une cavité ouverte (60) sur la face inférieure.

11. Puce selon l'une quelconque des revendications 1 à 8, **caractérisée en ce que** la partie supérieure (20) de la puce comprend une structure microfluidique (40').

12. Puce selon la revendication 11, **caractérisée en ce que** la partie supérieure (20) comprend des motifs de canaux microfluidiques présentant un rapport d'aspect allant de 1 à 1600.

13. Procédé de fabrication d'une puce microfluidique telle que définie à l'une quelconque des revendications précédentes, **caractérisé en ce qu'**il comprend au moins les étapes suivantes :
i) déposer une composition réticulable B apte à former ledit matériau polymère époxyde ayant un module de Young Y₂, dans un moule polymère approprié de la partie supérieure,
ii) initier la réticulation de la composition réticulable B,
iii) déposer une composition réticulable A apte à former ledit matériau polymère époxyde ayant un module de Young Y₁, sur la composition réticulable B avant la réticulation complète de la composition réticulable B,
iv) laisser réticuler les compositions réticulables A et B pendant un temps suffisant pour former respectivement les première et deuxième couches (201, 202) de la partie supérieure (2, 20, 200),
v) démouler la partie supérieure de la puce comprenant la première couche et la deuxième couche (201, 202), et
vi) éventuellement assembler la partie supérieure de la puce avec une partie inférieure (3, 30, 300), de sorte qu'au moins une partie de ladite deuxième couche (202) soit directement en contact physique avec la partie inférieure (3, 30, 300) de ladite puce.

14. Procédé selon la revendication 13, **caractérisé en ce qu'**il comprend en outre avant l'étape i), une étape a) de fabrication du moule polymère de la partie supérieure (2, 20, 200) comprenant au moins une sous-étape a₁) de préparation d'un modèle polymère de la partie supérieure, et une sous-étape a₂) de moulage avec ledit modèle polymère.

15. Utilisation d'une partie supérieure (2, 20, 200) comprenant au moins une première couche (201) d'un matériau polymère époxyde ayant un module de Young Y₁ mesuré à une température comprise entre 20 et 25°C, et au moins une deuxième couche (202) d'un matériau polymère époxyde ayant un module de Young Y₂ mesuré à une température comprise entre 20 et 25°C, lesdites première et deuxième couches (201, 202) étant telles que :
- le rapport Y₁/Y₂ est supérieur ou égal à 50,
- Y₂ est inférieur ou égal à 50 MPa,
- le module de Young Y₁ de la première couche (201) est d'au moins 0,1 GPa, et
- la deuxième couche (202) a une épaisseur allant de 0,2 mm à 2 mm, dans une puce microfluidique ouvrable et refermable de manière réversible.

16. Utilisation d'une puce microfluidique telle que définie à l'une quelconque des revendications 1 à 12, dans des applications médicales, biotechnologiques, biologiques, d'analyse, de synthèse chimique, ou de diagnostic clinique.

17. Utilisation selon la revendication 16, pour l'automatisation des essais biologiques, le séquençage de nouvelle génération, les tests diagnostic au lit du patient, l'analyse génétique, l'électrophorèse capillaire, l'amplification d'ADN, la biologie cellulaire, la protéomique, le diagnostic, la recherche de médicaments, la synthèse de molécules ou de nanomatériaux, ou les études cinétiques.

## Patentansprüche

1. Mikrofluidischer Chip, der auf umkehrbare Weise geöffnet und wieder geschlossen werden kann (1, 10, 11, 12, 100), umfassend mindestens einen unteren Teil (3, 30, 300) und mindestens einen oberen Teil (2, 20, 200), der konfiguriert ist, um mit dem unteren Teil (3, 30, 300) in Kontakt zu kommen und den Chip zu schließen, wobei der untere Teil (3, 30, 300) und/oder der obere Teil (2, 20, 200) eine mikrofluidische Struktur (4, 40, 40', 400) umfassen, **dadurch gekennzeichnet, dass**:
* der obere Teil (2, 20, 200) mindestens eine erste Schicht (201) eines Epoxidpolymermaterials, das ein Young'sches Modul Y₁ aufweist, gemessen bei einer Temperatur im Bereich zwischen 20 und 25 °C, und mindestens eine zweite Schicht (202) eines Epoxidpolymermaterials, das ein Young'sches Modul Y₂ aufweist, gemessen bei einer Temperatur im Bereich zwischen 20 und 25 °C, aufweist, wobei die erste und zweite Schicht (201, 202) derart sind, dass:
- das Verhältnis Y₁/Y₂ größer oder gleich 50 ist,
- Y₂ kleiner oder gleich 50 MPa ist,
* mindestens ein Teil der zweiten Schicht (202) direkt in physischem Kontakt mit dem unteren Teil (3, 30, 300) des Chips ist, wenn sich der Chip in der geschlossenen Konfiguration befindet,
* das Young'sche Modul Y₁ der ersten Schicht (201) mindestens 0,1 GPa ist,
* die zweite Schicht (202) eine Dicke aufweist, die von 0,2 mm bis 2 mm reicht; und
* der untere Teil (3, 30, 300) ein starres Material umfasst, das ein Young'sches Modul Y'₃, gemessen bei einer Temperatur im Bereich zwischen 20 und 25 °C, aufweist, sodass Y'₃ ≥ Y₁.

2. Chip nach Anspruch 1, **dadurch gekennzeichnet, dass** das Young'sche Modul Y₁ der ersten Schicht (201) mindestens 0,5 GPa ist, besonders bevorzugt mindestens 1 GPa, und noch bevorzugter mindestens 1,5 GPa.

3. Chip nach Anspruch 1 oder 2, **dadurch gekennzeichnet, dass**:
* das Epoxidpolymermaterial der ersten Schicht (201) durch Polyaddition einer vernetzbaren Zusammensetzung A erhalten wird, umfassend mindestens einen ersten Epoxidvorläufer, ausgewählt aus den Kondensationsreaktionsprodukten von Epichlorhydrin mit einem Polyphenol, mindestens einen zweiten Epoxidvorläufer, ausgewählt aus den aliphatischen Epoxidharzen von Diglycidylethern und den Kondensationsreaktionsprodukten von Epichlorhydrin mit einem Polyphenol und mindestens einem Härter, und
* das Epoxidpolymermaterial der zweitem Schicht (202) durch Polyaddition einer vernetzbaren Zusammensetzung B erhalten wird, umfassend mindestens einen ersten Epoxidvorläufer, ausgewählt aus den Kondensationsreaktionsprodukten von Epichlorhydrin mit Polyphenol, mindestens einem zweiten Epoxidvorläufer, ausgewählt aus den aliphatischen Epoxidharzen von Diglycidylethern und den Kondenstionsreaktionsprodukten von Epichlorhydrin mit einem Polyphenol und mindestens einem Härter.

4. Chip nach einem der vorhergehenden Ansprüche, **dadurch gekennzeichnet, dass** das Young'sche Modul Y'₃ mindestens 0,1 GPa ist, vorzugsweise mindestens 0,5 GPa, besonders bevorzugt mindestens 1 GPa, und noch bevorzugter mindestens 1,5 GPa ist.

5. Chip nach einem der vorhergehenden Ansprüche, **dadurch gekennzeichnet, dass** der obere Teil (2, 20, 200) ein transparentes Element ist.

6. Chip nach einem der vorhergehenden Ansprüche, **dadurch gekennzeichnet, dass** der obere Teil (2, 20, 200) mechanische Mittel (5, 50, 500) umfasst, die konfiguriert sind, um den mikrofluidischen Chip manuell zu öffnen, vorzugsweise durch Hebelwirkung.

7. Chip nach Anspruch 6, **dadurch gekennzeichnet, dass** der obere Teil (2, 20, 200) eine obere Seite (2-Fsup, 20-Fsup, 200-Fsup) umfasst, die der oberen Seite des Chips entspricht, und eine untere Seite (2-Finf, 20-Finf, 200-Finf), die der Seite entspricht, die mit dem unteren Teil des Chips in Kontakt kommt und den Chip schließt, und dadurch, dass die mechanischen Mittel abgeschrägte Kanten (5, 50, 500) sind, die derart ausgerichtet sind, dass die obere Seite (2-Fsup, 20-Fsup, 200-Fsup) des oberen Teils (2, 20, 200) des Chips eine größere Abmessung als die untere Seite (2-Finf, 20-Finf, 200-Finf) des oberen Teils (2, 20, 200) aufweist.

8. Chip nach einem der vorhergehenden Ansprüche, **dadurch gekennzeichnet, dass** der untere Teil (3, 30, 300) des Chips eine mikrofluidische Struktur (4, 40, 400) umfasst.

9. Chip nach Anspruch 8, **dadurch gekennzeichnet, dass** der obere Teil (2, 20, 200) des Chips eine obere Seite (2-Fsup, 20-Fsup, 200-Fsup) umfasst, die der oberen Seite des Chips entspricht, und eine untere Seite (2-Finf, 20-Finf, 200-Finf), die der Seite entspricht, die mit dem unteren Teil des Chips in Kontakt kommt und den Chip schließt, und dadurch, dass die untere Seite (2-Finf, 20-Finf, 200-Finf) des oberen Teils eine ebene Fläche aufweist.

10. Chip nach Anspruch 8, **dadurch gekennzeichnet, dass** der obere Teil (2, 20, 200) des Chips eine obere Seite (2-Fsup, 20-Fsup, 200-Fsup) umfasst, die der oberen Seite des Chips entspricht, und eine untere Seite (2-Finf, 20-Finf, 200-Finf), die der Seite entspricht, die mit dem unteren Teil des Chips in Kontakt kommt und den Chip schließt, und dadurch, dass der obere Teil (2, 20, 200) einen offenen Hohlraum (60) auf der unteren Seite umfasst.

11. Chip nach einem der Ansprüche 1 bis 8, **dadurch gekennzeichnet, dass** der obere Teil (20) des Chips eine mikrofluidische Struktur (40') umfasst.

12. Chip nach Anspruch 11, **dadurch gekennzeichnet, dass** der obere Teil (20) Muster von mikrofluidischen Kanälen umfasst, die ein Seitenverhältnis aufweisen, das von 1 bis 1600 reicht.

13. Verfahren zur Herstellung eines mikrofluidischen Chips, wie in einem der vorhergehenden Ansprüche definiert, **dadurch gekennzeichnet, dass** es mindestens die folgenden Schritte umfasst:
i) Ablegen einer vernetzbaren Zusammensetzung B, die ausgelegt ist, um das Epoxydpolymermaterial, das ein Young'sches Modul Y₂ aufweist, in einer geeigneten Polymerform des oberen Teils zu bilden,
ii) Initiieren der Vernetzung der vernetzbaren Zusammensetzung B
iii) Ablegen einer vernetzbaren Zusammensetzung A, die ausgelegt ist, um das Epoxydpolymermaterial, das ein Young'sches Modul Y₁ aufweist, auf der vernetzbaren Zusammensetzung vor der vollständigen Vernetzung der vernetzbaren Zusammensetzung B zu bilden,
iv) Vernetzenlassen der vernetzbaren Zusammensetzungen A und B während einer Zeit, die ausreichend ist, um jeweils die erste und zweite Schicht (201, 202) des oberen Teils (2, 20, 200) zu bilden,
v) Entformen des oberen Teils des Chips, umfassend die erste Schicht und die zweite Schicht (201, 202), und
vi) eventuell Zusammenbauen des oberen Teils des Chips mit einem unteren Teil (3, 30, 300), so dass mindestens ein Teil der zweiten Schicht (202) direkt in physischem Kontakt mit dem unteren Teil (3, 30, 300) des Chips ist.

14. Verfahren nach Anspruch 13, **dadurch gekennzeichnet, dass** es außerdem vor dem Schritt i) einen Schritt a) des Herstellens der Polymerform des oberen Teils (2, 20, 200) umfasst, umfassend mindestens einen Unterschritt a₁) des Herstellens eines Polymermodells des oberen Teils und einen Unterschritt a₂) des Formens mit dem Polymermodell.

15. Verwenden eines oberen Teils (2, 20, 200), umfassend mindestens eine erste Schicht (201) eines Epoxidpolymermaterials, das ein Young'sches Modul Y₁, gemessen bei einer Temperatur im Bereich zwischen 20 und 25 °C, aufweist, und mindestens eine zweite Schicht (202) eines Epoxidpolymermaterials, das ein Young'sches Modul Y₂, gemessen bei einer Temperatur im Bereich zwischen 20 und 25 °C, aufweist, wobei die erste und zweite Schicht (201, 202) derart sind, dass:
- das Verhältnis Y₁/Y₂ größer oder gleich 50 ist,
- Y₂ kleiner oder gleich 50 MPa ist,
- das Young'sche Modul Y₁ der ersten Schicht (201) mindestens 0,1 GPa ist, und
- die zweite Schicht (202) eine Dicke, die von 0,2 mm bis 2 mm reicht, in einem mikrofluidischen Chip aufweist, der auf umkehrbare Weise geöffnet und wieder geschlossen werden kann.

16. Verwendung eines mikrofluidischen Chips, wie in einem der Ansprüche 1 bis 12 definiert, in medizinischen, biotechnologischen, biologischen, analytischen, chemischsynthetischen oder klinisch-diagnostischen Anwendungen.

17. Verwendung nach Anspruch 16 zur Automatisierung von biologischen Prüfungen, neuartigen Sequenzierverfahren, diagnostischen Tests am Patientenbett, genetischer Analyse, Kapillarelektrophorese, DNA-Amplifizierung, Zellbiologie, Proteomik, Diagnose, Medikamentenforschung, Synthese von Molekülen oder Nanomaterialien oder kinetischen Studien.

## Claims

1. A reversibly openable and closable microfluidic chip (1, 10, 11, 12, 100) comprising at least one lower part (3, 30, 300) and at least one upper part (2, 20, 200) configured to come into contact with said lower part (3, 30, 300) and to close said chip, said lower part (3, 30, 300) and/or said upper part (2, 20, 200) comprising a microfluidic structure (4, 40, 40', 400),
**characterized in that:**
* said upper part (2, 20, 200) comprises at least a first layer (201) of an epoxide polymer material having a Young's modulus Y₁ measured at a temperature of between 20 and 25°C, and at least a second layer (202) of an epoxide polymer material having a Young's modulus Y₂ measured at a temperature of between 20 and 25°C, said first and second layers (201, 202) being such that:
- the Y₁/Y₂ ratio is greater than or equal to 50,
- Y₂ is less than or equal to 50 MPa,
* at least one part of said second layer (202) is directly in physical contact with the lower part (3, 30, 300) of said chip when the chip is in the closed configuration,
* the Young's modulus Y₁ of the first layer (201) is at least 0.1 Gpa,
* the second layer (202) has a thickness of from 0.2 mm to 2 mm, and
* the lower part (3, 30, 300) comprises a rigid material having a Young's modulus Y'₃ measured at a temperature of between 20 and 25°C such that Y'₃ ≥ Y₁.

2. The chip according to claim 1, **characterized in that** the Young's modulus Y₁ of the first layer (201) is at least 0.5 GPa, particularly preferably at least 1 GPa, and more particularly preferably at least 1.5 GPa.

3. The chip according to claim 1 or 2, **characterized in that**:
* the epoxide polymer material of the first layer (201) is obtained by polyaddition of a cross-linkable composition A comprising at least a first epoxide precursor chosen from the products of the condensation reaction of epichlorohydrin with a polyphenol, at least a second epoxide precursor chosen from diglycidyl ether aliphatic epoxy resins and the products of the condensation reaction of epichlorohydrin with a polyphenol, and at least one hardener, and
* the epoxide polymer material of the second layer (202) is obtained by polyaddition of a cross-linkable composition B comprising at least a first epoxide precursor chosen from the products of the condensation reaction of epichlorohydrin with a polyphenol, at least a second epoxide precursor chosen from diglycidyl ether aliphatic epoxy resins and the products of the condensation reaction of epichlorohydrin with a polyphenol, and at least one hardener.

4. The chip according to any one of the preceding claims, **characterized in that** the Young's modulus Y'₃ is at least 0.1 GPa, preferably at least 0.5 GPa, particularly preferably at least 1 GPa, and more particularly preferably at least 1.5 GPa.

5. The chip according to any one of the preceding claims, **characterized in that** the upper part (2, 20, 200) is a transparent element.

6. The chip according to any one of the preceding claims, **characterized in that** the upper part (2, 20, 200) comprises mechanical means (5, 50, 500) configured for manually opening the microfluidic chip, preferably by the lever effect.

7. The chip according to claim 6, **characterized in that** the upper part (2, 20, 200) comprises an upper face (2-Fsup, 20-Fsup, 200-Fsup) that corresponds to the upper face of the chip, and a lower face (2-Finf, 20-Finf, 200-Finf) that corresponds to the face that comes into contact with the lower part of the chip and closes said chip, and **in that** the mechanical means are chamfers (5, 50, 500) oriented in such a way that the upper face (2-Fsup, 20-Fsup, 200-Fsup) of the upper part (2, 20, 200) of the chip is of larger dimension than the lower face (2-Finf, 20-Finf, 200-Finf) of said upper part (2, 20, 200).

8. The chip according to any one of the preceding claims, **characterized in that** the lower part (3, 30, 300) of the chip comprises a microfluidic structure (4, 40, 400).

9. The chip according to claim 8, **characterized in that** the upper part (2, 20, 200) of the chip comprises an upper face (2-Fsup, 20-Fsup, 200-Fsup) that corresponds to the upper face of the chip, and a lower face (2-Finf, 20-Finf, 200-Finf) that corresponds to the face that comes into contact with the lower part of the chip and closes said chip, and **in that** the lower face (2-Finf, 20-Finf, 200-Finf) of the upper part has a planar surface.

10. The chip according to claim 8, **characterized in that** the upper part (2, 20, 200) of the chip comprises an upper face (2-Fsup, 20-Fsup, 200-Fsup) that corresponds to the upper face of the chip, and a lower face (2-Finf, 20-Finf, 200-Finf) that corresponds to the face that comes into contact with the lower part of the chip and closes said chip, and **in that** the upper part (2, 20, 200) comprises an open cavity (60) on the lower face.

11. The chip according to any one of claims 1 to 8, **characterized in that** the upper part (20) of the chip comprises a microfluidic structure (40').

12. The chip according to claim 11, **characterized in that** the upper part (20) comprises patterns of microfluidic channels having an aspect ratio ranging from 1 to 1600.

13. A method for manufacturing a microfluidic chip as defined in any one of the preceding claims, **characterized in that** it comprises at least the following steps:
i) depositing a cross-linkable composition B capable of forming said epoxide polymer material having a Young's modulus Y₂, in a suitable polymer mold of the upper part,
ii) initiating the cross-linking of the cross-linkable composition B,
iii) depositing a cross-linkable composition A capable of forming said epoxide polymer material having a Young's modulus Y₁ on the cross-linkable composition B before complete cross-linking of the cross-linkable composition B,
iv) leaving the cross-linkable compositions A and B to cross-link for a time sufficient to form the first and second layers (201, 202), respectively, of the upper part (2, 20, 200),
v) demolding the upper part of the chip comprising the first layer and the second layer (201, 202), and
vi) optionally assembling the upper part of the chip with a lower part (3, 30, 300), such that at least one part of said second layer (202) is directly in physical contact with the lower part (3, 30, 300) of said chip.

14. The method according to claim 13, **characterized in that** it also comprises, before step i), a step a) of manufacturing the polymer mold of the upper part (2, 20, 200) comprising at least one sub-step a₁) of preparing a polymer model of the upper part, and a sub-step a₂) of molding with said polymer model.

15. A use of an upper part (2, 20, 200) comprising at least a first layer (201) of an epoxide polymer material having a Young's modulus Y₁ measured at a temperature of between 20 and 25°C, and at least a second layer (202) of an epoxide polymer material having a Young's modulus Y₂ measured at a temperature comprised between 20 and 25°C, said first and second layers (201, 202) being such that:
- the Y₁/Y₂ ratio is greater than or equal to 50,
- Y₂ is less than or equal to 50 Mpa,
- the Young's modulus Y₁ of the first layer (201) is at least 0.1 Gpa, and
- the second layer (202) has a thickness of from 0.2 mm to 2 mm,
in a reversibly openable and closable microfluidic chip.

16. A use of a microfluidic chip as defined in any one of claims 1 to 12, in medical, biotechnological, biological, analysis, chemical synthesis and clinical diagnosis applications.

17. The use according to claim 16, for automating biological tests, new generation sequencing, point-of-care diagnostic tests, genetic analysis, capillary electrophoresis, DNA amplification, cell biology, proteomics, diagnostics, drug research, and the synthesis of molecules or nanomaterials, or kinetic studies.
